# EUROPÄISCHE PATENTSCHRIFT

(11) **EP 3 752 301 B1**
(45) Veröffentlichungstag und Bekanntmachung des Hinweises auf die Patenterteilung: **07.10.2026**
(21) Anmeldenummer: 19706464.5
(22) Anmeldetag: 14.02.2019
(51) Int. Cl.: B21D 37/08, B21D 43/02, B21D 43/05, B21D 43/13, B21D 43/14, B30B 15/04, B23P 21/00

(54) **FERTIGUNGSSYSTEM, FERTIGUNGSMODUL, VERFAHREN ZUM BETREIBEN UND EINRICHTEN EINER FERTIGUNGSLINIE, UND VERFAHREN ZUR HERSTELLUNG EINES WERKSTÜCKS**
PRODUCTION SYSTEM, PRODUCTION MODULE, METHOD FOR OPERATING AND SETTING UP A PRODUCTION LINE, AND METHOD FOR PRODUCING A WORKPIECE
SYSTÈME DE PRODUCTION, MODULE DE PRODUCTION, PROCÉDÉ DE FONCTIONNEMENT ET DE RÉGLAGE D'UNE LIGNE DE PRODUCTION, ET PROCÉDÉ DE FABRICATION D'UNE PIÈCE

(30) Priorität: 14.02.2018 DE 102018103330
(43) Veröffentlichungstag der Anmeldung: 23.12.2020
(73) Patentinhaber: Langenstein & Schemann GmbH, 96450 Coburg (DE)
(72) Erfinder: BAUERSACHS, Lothar, 96279 Weidhausen (DE)
(74) Vertreter: Meissner Bolte Nürnberg
(86) Internationale Anmeldenummer: PCT/EP2019/053691
(87) Internationale Veröffentlichungsnummer: WO 2019/158650

(56) Entgegenhaltungen:
- WO-A1-2015/010724
- CN-A- 105 033 090
- DE-A1- 102004 029 665
- DE-A1- 102005 004 564
- DE-A1- 102007 060 741
- DE-A1- 102008 017 397
- DE-A1- 102013 015 991
- DE-U1- 202005 013 912
- GB-A- 2 082 094
- KR-A- 20110 035 627

## Beschreibung

Die vorliegende Erfindung betrifft insbesondere ein Fertigungssystem, ein Fertigungsmodul, ein Verfahren zum Betreiben und Einrichten einer Fertigungslinie, und ein Verfahren zur Fertigung eines Werkstücks. Das Fertigungssystem kann eingerichtet sein zur Fertigung, insbesondere Herstellung und/oder Bearbeitung, insbesondere Umformung, von Werkstücken, beispielsweise zur Fertigung/Herstellung eines Werkstücks aus einem Vormaterial bzw. Rohling, wie z.B. einer Blechplatine, oder aus mehreren, insbesondere verschiedenen Vormaterialen, beispielsweise Kompositmaterialien.

Die DE 10 2013 015 991 A1 betrifft ein System zur Prozessoptimierung bei Arbeitsabläufen in der manuellen Fertigung. Das System ist modular aufgebaut und umfasst zwei oder mehr Arbeitsstationsmoduleinheiten zur manuellen Fertigung.

Die DE 10 2004 029 665 A1, auf der der Oberbegriff des Patentanspruchs 1 basiert, betrifft ein modulares Transfersystem für Werkstücke, bei dem Werkstückträger innerhalb eines Fertigungsmoduls positioniert werden können, wobei zur Bewegung der Werkstückträger die gleichen Servo-Antriebe verwendet werden können wie zur Positionierung im Fertigungsmodul. Die CN 105033090 A betrifft eine Maschine zur automatischen Herstellung von Dosen, mit mehreren Fertigungsstationen und einer separaten Transporteinheit für Werkstücke. Die Maschine der CN 105033090 A ist insgesamt nicht modular aufgebaut.

Die WO 2015/010724 bestrifft ein modulares Pressensystem, das mehrere in einer Bearbeitungslinie vorgesehene, austauschbare Pressenmodule aufweist.

Die DE 10 2007 060 741 A1 offenbart eine Pressenstraße zur Fertigung von Fahrzeugteilen, mit wenigstens zwei Pressen, mittels welchen wenigstens ein Werkstuck bearbeitet wird oder werden kann, und wenigstens einer Transfereinrichtung, mittels der das Werkstuck einer der Pressen automatisch zugeführt und/oder automatisch entnommen wird oder werden kann, wobei die Transfereinrichtung mit wenigstens einem Werkzeug ausgestattet ist, mittels welchem das Werkstuck bearbeitet wird oder werden kann.

Die GB 2 082 094 A offenbart eine Pressenstraße mit mehreren Pressen, wobei zwischen den Pressen Handhabungs- und Ablageeinheiten vorgesehen sind.

Die zu Grunde liegende Erfindung betrifft insbesondere Verbesserungen hinsichtlich des Aufbaus, der Wartung, des Betriebs, des Werkstückdurchsatzes und der betriebsbereiten Einrichtung eines Fertigungssystems, beispielsweise einer Umformanlage, z.B. einer Pressenstraße.

Ausgestaltungen der zu Grunde liegenden Erfindung ergeben sich insbesondere aus den anliegenden Patentansprüchen, sowie aus den nachfolgend beschriebenen Ausgestaltungen und Ausführungsbeispielen.

Nach einer Ausgestaltung ist ein Fertigungsmodul zur Durchführung zumindest eines Fertigungsschritts in einem Verfahren zur Fertigung eines Werkstücks vorgesehen, wobei das Fertigungsmodul eingerichtet ist zur Integration in ein modulares Fertigungssystem mit mehreren entlang einer Fertigungslinie sequentiell zueinander angeordneten Fertigungsmodulen. Die Fertigungsmodule können Fertigungsräume umfassen, die entlang der Fertigungslinie einen, insbesondere durchgehenden, Fertigungskanal bilden (oder: definieren) können. Durch den Fertigungskanal kann, z.B. mittels einer oder mehreren Handhabungseinheiten, ein, insbesondere durchgehender bzw. getakteter, Werkstücktransport zwischen einzelnen Fertigungspositionen (oder: Fertigungsstadien) der Fertigungsmodule erfolgen. Bei dem Fertigungssystem kann es sich beispielsweise um eine Pressenlinie, insbesondere eine Pressenstraße, handeln, und bei dem Fertigungsmodul kann es sich beispielsweise um ein Pressenmodul handeln. Nachfolgende Ausführungen zum Fertigungssystem und Fertigungsmodul gelten entsprechend für Pressenlinie und Pressenmodul, und umgekehrt.

Ein Fertigungskanal kann beispielsweise zumindest zwei, insbesondere separate, Fertigungsräume zweier in Fertigungsrichtung längs der Fertigungslinie unmittelbar aufeinanderfolgender, insbesondere beabstandeter, Fertigungsmodule umfassen. Der Fertigungskanal kann in Ausgestaltungen die Fertigungsräume sämtlicher Fertigungsmodule eines Fertigungssystems umfassen oder dadurch gebildet sein. Insbesondere kann in Ausgestaltungen vorgesehen sein, dass zumindest ein Fertigungsmodul des Fertigungssystems einen von Fertigungsräumen bzw. Fertigungsstadien weiterer Fertigungsmodule des Fertigungssystems räumlich separierten Fertigungsraum umfasst, in dem, unabhängig von Fertigungsoperationen der weiteren Fertigungsmodule, eine, insbesondere eine einzige, jeweils spezifische Fertigungsoperation durchführbar ist.

Damit unterscheidet sich zumindest eines der Fertigungsmodule von bekannten Fertigungssystemen, z.B. Mehrstufenpressen, bei welchen mehrere Fertigungsoperationen bzw. Fertigungsstadien in einem gemeinsamen (zusammenhängenden) Fertigungsraum durchgeführt werden.

Der Begriff Fertigungslinie soll insbesondere eine sequentielle Aufeinanderfolge von Fertigungsschritten (oder: Fertigungspositionen, Fertigungsstadien) umfassen. Dabei soll der Teilbegriff "Linie" nicht einschränkend dahingehend ausgelegt werden, dass die einzelnen Fertigungsschritte der Fertigungslinie aus räumlicher Sicht linear (hintereinander) angeordnet (oder: positioniert) sind. Mit anderen Worten kann der Gang der Werkstücke längs der Fertigungslinie von einer im Wesentlichen linearen Bewegungsführung abweichen, und beispielsweise angewinkelt erfolgen. Jedoch ist es in Ausgestaltungen möglich, dass die Fertigungslinie eine im Wesentlichen linearen Bewegungsführung definiert, und beispielsweise einen aus räumlicher Sicht linearen Fertigungskanal längs der Fertigungslinie bildet.

In Ausgestaltungen umfasst das Fertigungsmodul zumindest eine Handhabungseinheit, welche in Richtung der Fertigungslinie dem Fertigungsmodul vor- oder nachgeschaltet ein Ablagesystem mit zumindest einer Ablageeinheit zur Ablage eines Werkstücks oder einer Werkstückkomponente umfasst.

Das Ablagesystem ist derart eingerichtet, dass ein Werkstück oder eine Werkstückkomponente bei der Fertigung zwischen einer Ablageposition der Ablageeinheit und einer Fertigungsposition im Fertigungsraum eines zur Durchführung eines Fertigungsschritts in Fertigungsrichtung längs der Fertigungslinie unmittelbar nachgeschalteten Fertigungsmoduls überführbar ist.

Mit anderen Worten kann das vorgeschlagene Fertigungsmodul derart betrieben werden, dass das Werkstück von der Fertigungsposition, d.h. vom Fertigungsraum, zunächst auf die Ablageeinheit transferiert wird, und von der Ablageeinheit sodann in Fertigungsrichtung längs der Fertigungsrichtung in eine, insbesondere unmittelbar, nachfolgende Fertigungsposition, bzw. in einen nachfolgenden Fertigungsraum, transferiert wird.

Unter einer Ablageposition kann, im Unterschied zu einer Arbeitsposition, insbesondere eine Position innerhalb der Fertigungslinie verstanden werden, an welcher ein Werkstück außerhalb eines Fertigungsraums eines zur aktiven Bearbeitung des Werkstücks eingerichteten Fertigungsmoduls abgelegt werden kann. Die Ablageposition kann hinsichtlich einer aktiven Werkstückbearbeitung bzw. aktiven Werkstückfertigung, insbesondere im Sinne einer technischen Weiterbildung des Werkstücks im Fertigungsgang der Fertigungsräume, insoweit als passiv bezeichnet werden. Zwar kann die Ablageposition innerhalb der Fertigungslinie gelegen sein, jedoch bildet die Ablageposition keine Fertigungsposition in einem Fertigungsraum eines Fertigungsmoduls in dem hierin verwendeten Sinne.

Durch Vorsehen der Ablageeinheit und Ablageposition ergeben sich insbesondere Vorteile hinsichtlich Fertigungsflexibilität und/oder hinsichtlich der Einrichtung, Wartung, und Konfiguration eines Fertigungssystems mit vorgegebenen Fertigungsstadien. Beispielsweise ermöglicht die Ablageposition zusätzliche Handhabungsoperationen, wie z.B. Drehen, und/oder Operationen wie Ein- oder Ausschleusen von Werkstücken oder Werkstückkomponenten (beispielsweise im Rahmen einer additiven Fertigung). Ferner ermöglicht die Ablageeinheit eine Konfiguration, bei welcher Fertigungszwischenschritte, insbesondere zusätzliche Fertigungszwischenschritte, im Bereich der Ablageposition oder außerhalb der Fertigungslinie flexibel integriert werden können, ohne dass die Gesamtkonfiguration der Fertigungsmodule zueinander geändert werden braucht. Ferner vereinfacht das vorgeschlagene Ablagesystem den Transfer, insbesondere die Übergabe, von Werkstücken oder Werkstückkomponenten zwischen benachbarten Fertigungsmodulen in Fertigungsrichtung längs der Fertigungslinie.

In Ausgestaltungen kann die Handhabungseinheit zumindest einen parallel zur Breitseite des Fertigungsmoduls und quer, insbesondere lateral, zur Fertigungsrichtung längs der Fertigungslinie, verschiebbar angebrachten, und dem Arbeitsraum in Fertigungsrichtung längs der Fertigungslinie vor- oder nachgeschalteten Verschiebeschlitten umfassen. Der Verschiebeschlitten kann derart ausgebildet sein, dass damit ein Werkstück oder eine Werkstückkomponente, ausgebildet beispielsweise zur fertigungstechnischen Verbindung mit einem Werkstück, zwischen einer dem Fertigungsraum zugeordneten (insbesondere nach- oder vorgeschalteten) Ablageposition und zumindest einer von der Ablageposition, insbesondere der Fertigungslinie, lateral beabstandeten weiteren Ablageposition bewegbar ist. Insbesondere kann der Verschiebeschlitten derart ausgebildet sein, dass dieser von der Fertigungslinie weg nach außen oder zur Fertigungslinie hin nach innen bewegbar ist. Beispielsweise können mit einen derart ausgebildeten Verschiebeschlitten Werkstücke und/oder Werkstückkomponenten in den Fertigungsgang eingeschleust, oder vom Fertigungsgang ausgeschleust werden. Der Verschiebeschlitten ermöglicht insoweit eine weitere Verbesserung der Fertigungsflexibilität.

In Ausgestaltungen kann die Handhabungseinheit zumindest zwei, insbesondere genau zwei, Verschiebeschlitten umfassen. Die Handhabungseinheit kann derart eingerichtet sein, dass die Verschiebeschlitten, beispielsweise mittels einer Verschiebeeinheit, insbesondere einer Linearverschiebeeinheit, zwischen einer dem Fertigungsraum bzw. der Fertigungslinie zugeordneten ersten Position und zumindest einer vom Fertigungsraum bzw. der Fertigungslinie lateral abgewandten zweiten Position bewegbar sind. In Ausgestaltungen kann die Handhabungseinheit derart eingerichtet sein, dass die Verschiebeschlitten synchronisiert bewegt, insbesondere verschoben werden können. Die Handhabungseinrichtung, insbesondere die Verschiebeschlitten, können derart eingerichtet sein, dass die zumindest eine zweite Position zumindest teilweise außerhalb des Fertigungskanals gelegen ist. Vorzugsweise sind die Verschiebeschlitten lateral und senkrecht zur Fertigungsrichtung längs der Fertigungslinie bewegbar.

Durch eine Handhabungseinheit umfassend die Verschiebeschlitten kann, insbesondere im Hinblick auf das Ein- und Ausschleusen von Werkstücken oder Werkstückkomponenten, eine vorteilhafte Fertigungsflexibilität erreicht werden.

In Ausgestaltungen kann das Fertigungsmodul eine weitere Handhabungseinheit umfassen, die eingerichtet ist zur Überführung (oder: zum Transfer) des oder eines Werkstücks oder der oder einer Werkstückkomponente zwischen der Ablageposition einer dem Fertigungsmodul bzw. dem Fertigungsraum des Fertigungsmoduls vor- und/oder nachgeschalteten Ablageeinheit und der Fertigungsposition im Fertigungsraum des jeweiligen Fertigungsmoduls. Insbesondere kann die Handhabungseinheit für einen Transfer eines Werkstücks oder einer Werkstückkomponente in oder aus dem Fertigungsraum ausgebildet sein. In Zusammenwirken mit der Ablageeinheit kann die Übergabe an ein in Fertigungsrichtung längs der Fertigungslinie unmittelbar nachfolgendes Fertigungsmodul vereinfacht werden. Darüber hinaus ergeben sich in Kombination mit der Ablageeinheit zusätzliche fertigungstechnische Möglichkeiten für Handhabung und Durchführung von Fertigungszwischenschritten.

Nach Ausgestaltungen kann das zumindest eine Ablagesystem an einer Breitseite des Fertigungsmoduls, insbesondere an einer Breitseite eines Rahmens des Fertigungsmoduls, angebracht sein. Unter der Breitseite soll insbesondere eine in Richtung der Fertigungslinie orientierte Seite oder Fläche des Fertigungsmoduls, beispielsweise eines Rahmens des Fertigungsmoduls, verstanden werden. Ein Vorteil einer montagetechnischen Kopplung des Ablagesystems an das Fertigungsmodul kann insbesondere darin gesehen werden, dass ein Austausch eines Fertigungsmoduls, und die damit einhergehende Neueinrichtung eines Austauschmoduls, in einem flexiblen, modularen Fertigungssystem mit mehreren in Reihe geschalteten Fertigungsmodulen vereinfacht werden kann. Insbesondere kann ein Austauschmodul mitsamt Ablagesystem vor dem Austausch betriebsfertig eingerichtet werden. Beispielsweise ist es möglich, die Fertigungsabläufe und Bewegungsabläufe für das oder die vom Austauschmodul umfassten Fertigungsstadien noch vor dem Austausch einzurichten, so dass der (zeitliche) Aufwand zum eigentlichen Austausch des Fertigungsmoduls in der Fertigungslinie und die Wiederinbetriebnahme bzw. Wiederaufnahme der Fertigung reduziert werden können. Insbesondere ist es möglich, dem Austauschmodul außerhalb der Fertigungslinie diejenigen Fertigungs- und/oder Bewegungssequenzen anzulernen, die nach Integration in die Fertigungslinie zur Werkstückfertigung erforderlich sind.

Nach Ausgestaltungen kann das Ablagesystem dazu eingerichtet sein, separate und/oder zusätzliche Prozessfunktionen auszuführen. Beispielsweise kann eine solche Prozessfunktion umfassen: Drehen, Markieren, Prozess und/oder Qualitätskontrolle von Werkstücken oder Werkstückkomponenten. Ferner kann das Ablagesystem dazu eingerichtet, insbesondere betreibbar, sein, Werkstücke oder Werkstückkomponenten ein- und/oder auszuschleusen, d.h. der Fertigungslinie zuzuführen, oder der Fertigungslinie, beispielsweise kurzzeitig oder dauerhaft, zu entnehmen. Durch solche zusätzlichen Prozessfunktionen kann für die Werkstückfertigung eine vorteilhafte Fertigungsflexibilität erreicht werden.

In Ausgestaltungen kann das Fertigungsmodul des Weiteren eine mechanische Verbindungseinheit (oder: Verbindungsschnittstelle) zum austauschbar mechanischen Koppeln (oder: Verbinden) des Fertigungsmoduls mit einer der Fertigungslinie zugeordneten Plattform (oder: Komplementärschnittstelle). Die Plattform kann mehrere, mit Fertigungsmodulen modular bestückbare Fertigungsmodulstellplätze aufweisen. Ein Fertigungsmodulstellplatz kann eingerichtet sein zur modularen, austauschbaren Positionierung und Einrichtung eines Fertigungsmoduls in einer Fertigungslinie mit sequentiell längs der Fertigungslinie hintereinander angeordneten Fertigungsmodulen. Durch die vorgeschlagenen Fertigungsmodulstellplätze können insbesondere Vorteile hinsichtlich der Fertigungsflexibilität erreicht werden.

In Ausgestaltungen kann das Fertigungsmodul des Weiteren eine Steuerschnittstelle umfassen, die eingerichtet ist zur austauschbar lösbaren, steuerungstechnischen Kopplung mit einer korrespondierenden Komplementärsteuerschnittstelle des Fertigungssystems. Die Steuerschnittstelle und die Komplementärsteuerschnittstelle können dazu eingerichtet sein, Steuer- und/oder Prozesssignale und ggf. entsprechende elektronische (Mess- und/oder Steuer-)Daten betreffend den Betrieb des Ablagesystems und/oder die Durchführung einer Fertigungsoperation durch eine Fertigungseinheit des Fertigungsmoduls auszutauschen. Entsprechende Schnittstellen ermöglichen einen vergleichsweise einfachen Austausch eines Fertigungsmoduls, was insbesondere Vorteile hinsichtlich Einrichtung und/oder Wartung der Fertigungslinie bzw. des Fertigungssystems mit sich bringt.

Nach Ausgestaltungen kann das Fertigungsmodul des Weiteren eine Steuereinheit zur Steuerung des Fertigungsmoduls umfassen. Die Steuereinheit kann insbesondere eingerichtet sein zur Durchführung von Fertigungsoperationen, beispielsweise durch Betrieb einer Fertigungseinheit des Fertigungsmoduls. Bei der Fertigungseinheit kann es sich beispielsweise um eine Werkzeugeinheit zur Durchführung einer subtraktiven (z.B. Fräsen), formativen (z.B. Umformen), insbesondere umformenden, oder additiven (z.B. 3D-Druck) Fertigungsoperation, handeln.

In Ausgestaltungen kann die Steuereinheit so ausgebildet sein, dass diese in einer Betriebsart als Slave-Steuereinheit zur Umsetzung von Steuerbefehlen einer steuerungstechnisch übergeordneten Mastersteuerung des Fertigungssystems betreibbar ist. Das ermöglicht eine vergleichsweise einfache Integration eines Fertigungsmoduls in eine Fertigungslinie im Rahmen eines Modultausches. Insbesondere kann das Fertigungsmodul außerhalb der Fertigungslinie betriebsfertig eingerichtet und aufgesetzt werden, so dass beispielsweise konkrete Austauschoperationen zur Integration in eine Fertigungslinie im Wesentlichen auf mechanische Ankopplung an einen entsprechenden Fertigungsmodulstellplatz reduziert werden können.

Ausgestaltungen betreffen ferner ein Fertigungssystem umfassend zumindest einen modular austauschbar bestückbaren Fertigungsmodulstellplatz, vorzugsweise zumindest zwei oder mehrere modular austauschbar bestückbare Fertigungsmodulstellplätze. Der zumindest eine oder die zumindest zwei oder mehreren Fertigungsmodulstellplätze können derart ausgebildet sein, dass diese mit einem Fertigungsmodul nach einer der hierin beschriebenen erfindungsgemäßen Ausgestaltungen modular austauschbar bestückt ist/sind. Für ein solches Fertigungssystem ergeben sich insbesondere Vorteile hinsichtlich der damit erreichbaren Fertigungsflexibilität, sowie Vorteile hinsichtlich Einrichtung, Betrieb, Wartung und/oder Inbetriebnahme.

In Ausgestaltungen kann das Fertigungssystem zumindest einen Fertigungsmodulstellplatz umfassen, der mit einem Fertigungsmodul zur subtraktiven, formativen, und/oder additiven Fertigung eines Werkstücks modular austauschbar bestückbar ist bzw. bestückt ist. Insbesondere kann das Fertigungssystem zumindest ein modular austauschbar in die Fertigungslinie integriertes Fertigungsmodul umfassen, welches ausgebildet ist zur Durchführung einer subtraktiven, formativen, und/oder additiven Fertigungsoperation an einem Werkstück oder einer Werkstückkomponente.

Nach Ausgestaltungen kann das Fertigungssystem eine als Master-Steuerung ausgebildete erste Steuereinheit umfassen, die steuerungstechnisch eingerichtet ist zur Kommunikation mit einer als Slave-Steuerung betreibbaren zweiten Steuereinheit zumindest eines der Fertigungsmodule. Die zweite Steuereinheit kann in Ausgestaltungen derart eingerichtet sein, dass diese wahlweise unabhängig von der Master-Steuerung betreibbar ist. Beispielsweise kann die zweite Steuereinheit derart eingerichtet sein, dass diese unabhängig von der Master-Steuerung steuerungstechnisch zur Integration in die Fertigungslinie eingerichtet werden kann. Insbesondere kann die zweite Steuereinheit nach Art einer Inselsteuerung für das Fertigungsmodul mit übergeordneter Mastersteuerung ausgebildet sein. Durch eine entsprechend steuerungstechnische Einrichtung der Fertigungsmodule und des Fertigungssystems können beispielsweise verkürzte Austauschzeiten beim Tausch eines Fertigungsmoduls und/oder bei Integration eines, insbesondere weiteren oder anderen, Fertigungsmoduls in eine Fertigungslinie erreicht werden.

In Ausgestaltungen der Erfindung kann ein Verfahren zur Herstellung eines Werkstücks mit einem Fertigungssystem nach einer der hierin beschriebenen Ausgestaltungen vorgesehen sein, bzw. es kann ein Verfahren zur Herstellung eines Werkstücks vorgesehen sein, bei der das Werkstück mittels einer Fertigungslinie mit zumindest einem Fertigungsmodul nach einer der hierin beschriebenen erfindungsgemäßen Ausgestaltungen hergestellt wird.

In Ausgestaltungen kann ein derartiges Verfahren insbesondere zumindest einen der folgenden Schritte umfassen:
- Überführen des Werkstücks oder der Werkstückkomponente mittels einer Handhabungseinheit zwischen einer der Fertigungslinie zugeordneten Ablageposition der Ablageeinheit und einer der Ablageposition in Fertigungsrichtung längs der Fertigungslinie unmittelbar nachgeschalteten Fertigungsposition im Fertigungsraum eines Fertigungsmoduls; wobei die Handhabungseinheit dem Fertigungsmodul zugeordnet ist, und optional durch eine Steuerung des Fertigungsmoduls gesteuert wird;
- Überführen des Werkstücks oder der Werkstückkomponente zwischen einer der Fertigungslinie zugeordneten Ablageposition und einer weiteren Ablageposition, insbesondere außerhalb der Fertigungslinie, durch Überführen der Ablageeinheit mit dem darauf befindlichen Werkstück oder der darauf befindlichen Werkstückkomponente zwischen der Ablageposition und der weiteren Ablageposition; wobei in der Ablageposition oder in der weiteren Ablageposition optional ein Handhabungs- und/oder Fertigungszwischenschritt durchgeführt wird.

In Ausgestaltungen kann ein entsprechendes Verfahren beispielsweise aufeinanderfolgend die folgenden Schritte umfassen:
- Bereitstellen eines Werkstücks oder einer Werkstückkomponente;
- Überführen (oder: Transfer) des Werkstücks oder der Werkstückkomponente auf eine einem Fertigungsmodul in Fertigungsrichtung längs der Fertigungslinie unmittelbar vorgeschaltete Ablageeinheit, insbesondere auf einen Ablageschlitten, das Ablagesystems;
- Überführen des Werkstücks oder der Werkstückkomponente von der Ablageeinheit in eine Fertigungsposition im Fertigungsraum des Fertigungsmoduls;
- Durchführen einer Fertigungsoperation durch entsprechenden Betrieb einer Fertigungseinheit, beispielsweise eines Fertigungswerkzeugs, des Fertigungsmoduls;
- Überführen des Werkstücks nach Durchführen der Fertigungsoperation von der Fertigungsposition auf eine dem Fertigungsmodul, insbesondere der Fertigungsposition, in Fertigungsrichtung längs der Fertigungslinie Ablageeinheit unmittelbar nachgeschaltete weitere Ablageeinheit;
- Überführen des Werkstücks von der weiteren Ablageeinheit in eine weitere Fertigungsposition in einem weiteren Fertigungsraum eines der Ablageeinheit in Fertigungsrichtung längs der Fertigungslinie unmittelbar nachgeschalteten weiteren Fertigungsmoduls, und Durchführen eines dem weiteren Fertigungsmodul zugeordneten Fertigungsschritts durch entsprechenden Betrieb des weiteren Fertigungsmoduls.

Daran anschließen können sich weitere Schritte, in welchen das Werkstück zwischen Ablagepositionen und Fertigungspositionen längs und im Gang der Fertigungslinie transferiert wird.

Bei Ausgestaltungen des Verfahrens können in oder im Zusammenhang mit der Ablageposition auf der Ablageeinheit zusätzliche Handhabungsoperationen und/oder Fertigungszwischenschritte, wie z.B. Markieren, ausgeführt werden. Dadurch kann insbesondere eine verbesserte Fertigungsflexibilität erreicht werden.

Handhabungsoperationen können beispielsweise ein translatorische und/oder rotatorische Bewegungen des Werkstücks oder der Werkstückkomponente umfassen.

Zusätzliche Fertigungszwischenschritte können beispielsweise Operationen wie Markieren, Qualitätskontrolle, usw. umfassen. Die zusätzlichen Fertigungszwischenschritte können im Bereich der Fertigungslinie, insbesondere innerhalb des Fertigungskanals, durchgeführt werden. Alternative können einzelne zusätzliche Fertigungszwischenschritte auch außerhalb der Fertigungslinie, insbesondere außerhalb des Fertigungskanals, durchgeführt werden.

Das Verfahren kann in Ausgestaltungen insbesondere derart ausgebildet sein, dass, durch entsprechenden Betrieb des Ablagesystems, beispielsweise einer Bewegung des oder der Verschiebeschlitten quer zur Fertigungslinie lateral nach außen oder innen, ein Werkstück ausgeschleust wird. Ferner kann in Ausgestaltungen vorgesehen sein, dass eine, z.B. mit dem Werkstück zu verbindende, Werkstückkomponente durch entsprechenden Betrieb des Ablagesystems in die Fertigungslinie eingeschleust wird.

Entsprechend kann das Verfahren in Ausgestaltungen zumindest einen der folgenden weiteren Schritte umfassen:
- Bereitstellen einer mit einem Werkstück in einem Fertigungsschritt zu verbindenden Werkstückkomponente;
- Einschleusen der Werkstückkomponente in die Fertigungslinie, insbesondere durch Transfer eines die Werkstückkomponente tragenden Verschiebeschlittens hin zur Fertigungslinie, derart, dass die Werkstückkomponente durch eine Handhabungseinrichtung, z.B. eines benachbarten Fertigungsmoduls, vom Verschiebeschlitten in den Fertigungsraum überführt werden kann;
- Überführen der Werkstückkomponente in den Fertigungsraum;
- Ausführen eines Fertigungsschritts, bei dem ein im Fertigungsraum befindliches oder zusammen mit der Werkstückkomponente in den Fertigungsraum überführtes Werkstück mit der Werkstückkomponente verbunden wird; und
- Überführen des Werkstücks einschließlich der Werkstückkomponente zu einer dem Fertigungsraum in Fertigungsrichtung längs der Fertigungslinie unmittelbar nachgeordnete Ablageeinheit.

In Ausgestaltungen kann vorgesehen sein, dass die Ablageeinheit, insbesondere der Verschiebeschlitten vor, bei, insbesondere während, oder nach einem Fertigungsprozess eines vor- und/oder nachgeschalteten Fertigungsmoduls bewegt bzw. betrieben wird. Bei mehreren Ablageeinheiten, insbesondere Verschiebeschlitten können diese beispielsweise synchron betrieben werden. Beispielsweise ist es möglich, dass eine erste Ablageeinheit ein Werkstück bzw. eine Werkstückkomponente in die Fertigungslinie einschleust, während eine zugeordnete zweite Ablageeinheit ein Werkstück aus der Fertigungslinie ausschleust. Das Ein- und Ausschleusen kann in Fertigungsrichtung längs der Fertigungslinie betrachtet einer Seite aus oder von gegenüberliegenden Seiten aus erfolgen.

In Ausgestaltungen können mehrere, insbesondere verschiedene, Fertigungsmodule vorgesehen sein, wobei zumindest zwei Fertigungsmodule, vorzugsweise mehrere Fertigungsmodule, insbesondere alle Fertigungsmodule, die zur aktiven subtraktiven, formativen, und/oder additiven Durchführung einer Fertigungsoperation ausgebildet sind, jeweils ein zugeordnetes Ablagesystem umfassen. Die Ablagesysteme können derart angeordnet sein, dass in Fertigungsrichtung längs der Fertigungslinie zwischen unmittelbar benachbarten Fertigungsmodulen, beispielsweise bei einer Gruppe von Fertigungsmodulen, jeweils zumindest ein, insbesondere genau ein, Ablagesystem, insbesondere eine Ablageeinheit, vorhanden ist. Ferner können die Ablagesysteme zumindest derart betreibbar ausgebildet sein, dass Werkstücke bei Durchlauf durch die Fertigungslinie bzw. der Gruppe von Fertigungsmodulen, zwischen unmittelbar aufeinanderfolgenden Fertigungsräumen jeweils auf eine Ablageeinheit abgelegt werden. Mit anderen Worten kann ein Transfer von einem Fertigungsraum zu einem unmittelbar nachfolgenden Fertigungsraum eine Ablage auf einer Ablageeinheit umfassen. Den Transfer zu und von der Ablageeinheit aus bzw. in den jeweiligen Fertigungsraum kann durch entsprechenden Betrieb einer Handhabungseinrichtung des Fertigungsmoduls erfolgen. Eine entsprechende Handhabungseinrichtung kann beispielsweise integriert mit dem Fertigungsmodul ausgebildet sein. Dadurch ist es beispielsweise möglich, die Handhabungseinrichtung steuerungstechnisch außerhalb der Fertigungslinie einzurichten, was insbesondere Vorteile hinsichtlich Austausch/Ersatz von Fertigungsmodulen mit sich bringen kann.

Unter dem Werkstück soll hierin nicht lediglich das am Ende der Fertigungslinie vorliegende Endprodukt verstanden werden, sondern der Begriff Werkstück wird hierin insbesondere auch für das Ausgangs- oder Rohmaterial und alle Zwischenstadien verwendet.

In Ausgestaltungen ist ein Computerprogrammprodukt vorgesehen, umfassend von einer zur Steuerung einer Fertigungsanlage nach einer der hierin beschriebenen erfindungsgemäßen Ausgestaltungen eingerichteten Prozessor- oder Recheneinheit ausführbare Befehle, wobei die Ausführung der Befehle durch die Prozessor- oder Recheneinheit bei der Fertigungsanlage ein Verfahren nach einem der hierin beschriebenen Ausgestaltungen, insbesondere die Durchführung von hierin beschriebenen Verfahrensschritten, bewirkt.

Nach einer Ausgestaltung ist eine Steuerung vorgesehen, die Mittel, insbesondere eine Prozessor- oder Rechnereinheit, umfasst, die eingerichtet sind/ist zur Steuerung einer Fertigungsanlage nach einem der hierin beschriebenen Ausgestaltungen, zur Ausführung eines Verfahrens entsprechend einer der hierin beschriebenen verfahrensgemäßen Ausgestaltungen.

Bei dem Fertigungsmodul kann es sich um ein Umformmodul, insbesondere ein Pressenmodul, zur Bearbeitung von Werkstücken Handeln. Die Bearbeitung kann dabei Bearbeitungsoperationen wie Umformen, insbesondere Kaltumformung, Halbwarmumformung und Warmumformung, Fließpressen, Stanzen, Schneiden, Fügen, Verbinden, Kalibrieren, Schmieden, Tiefziehen, Pressen, etc., insbesondere beliebige Kombinationen daraus, umfassen. Das Pressenmodul kann zur Bearbeitung von Werkstücken aus Metall, z.B. Blech, oder von Werkstücken, die zumindest teilweise aus Metall bestehen, sowie von Werkstücken, die aus mehreren gleichen oder unterschiedlichen Materialien bestehen oder kombiniert sind, eingerichtet sein.

Das Pressenmodul kann ausgebildet und eingerichtet sein zur modularen Integration in eine Pressenlinie (oder: Pressenstraße) mit zumindest einem, mit einem Pressenmodul modular austauschbar bestückbaren Pressenmodulstellplatz, und beispielsweise mit mehreren Bearbeitungsstationen.

Die Fertigungslinie, beispielsweise Pressenlinie, kann mehrere, einzelne, und insbesondere miteinander zumindest teilweise verschaltete, Fertigungsmodule, z.B. Pressenmodule, insbesondere Umformmodule, oder Fertigungsmodulgruppen umfassen, bei welchen einzelne, insbesondere separat steuerbare Fertigungsmodule, z.B. Pressenmodule, untereinander z.B. durch Transporteinheiten (oder: Transfereinheiten, Handhabungseinheiten) zum Transport (oder: Transfer, Handhabung) von Werkstücken zwischen den Bearbeitungsstationen bzw. Pressenmodulen bzw. Fertigungsmodulen gekoppelt sein können. Eine Fertigungsmodulgruppe einer Fertigungslinie kann z.B. mehrere der hierin vorgeschlagenen Fertigungsmodule mit Ablagesystem umfassen. An dieser Stelle soll erwähnt werden, dass eine Fertigungsmodulgruppe im Sinne der Erfindung ebenfalls als eine Art Fertigungslinie verstanden werden kann. Insbesondere können mehrere Fertigungslinien, oder Fertigungsmodulgruppen zu einer Fertigungsanlage kombiniert werden.

Modular austauschbar bestückbare Fertigungsmodulstellplätze, z.B. Pressenmodulstellplätze, können insbesondere derart eingerichtet sein, dass einzelne Fertigungsmodule, z.B. Pressenmodule, insbesondere jedes Fertigungsmodul, z.B. Pressenmodul einer Pressenlinie, zerstörungsfrei austauschbar bzw. zerstörungsfrei wechselbar an einem entsprechenden Fertigungsmodulstellplatz, z.B. Pressenmodulstellplatz, in die Fertigungslinie, z.B. Pressenlinie, insbesondere einen Fertigungsverbund, z.B. Pressenverbund, aus mehreren in Reihe angeordneten Fertigungsmodulen, z.B. Pressenmodulen, integriert werden kann. Unter zerstörungsfrei austauschbar bzw. wechselbar soll insbesondere verstanden werden, dass ein entsprechendes Fertigungsmodul, z.B. Pressenmodul, als Ganzes, insbesondere als funktionsfähige Einheit, d.h. unter Beibehaltung der grundsätzlichen Funktionsfähigkeit, aus einem Fertigungsverbund (oder: der Fertigungslinie), z.B. Pressenverbund, entnommen, und insbesondere wieder eingesetzt werden kann.

Jedes Fertigungsmodul, beispielsweise jedes Pressenmodul innerhalb der Pressenlinie, kann entsprechend einer jeweiligen Konfiguration einer fest vorgegebenen Fertigungs- oder Bearbeitungsoperation, insbesondere Umformoperation, zugeordnet sein, beispielsweise indem das Fertigungsmodul, z.B. Pressenmodul, mit entsprechenden Werkzeugen bestückt ist oder wird.

Das Fertigungsmodul, beispielsweise Pressenmodul, kann einen, insbesondere umfangsseitig geschlossenen, Rahmen umfassen. Ist das Fertigungsmodul als Umformmodul, insbesondere als Pressenmodul ausgebildet, kann dieses zumindest einen am Rahmen bewegbar, insbesondere hin-und-her bewegbar, montierten und zur Werkstückbearbeitung ausgebildeten Stößel umfassen. Ferner kann ein, insbesondere pneumatisch, elektrisch, und/oder hydraulisch betreibbarer, Antrieb vorgesehen sein, der, einerseits, beispielsweise mit dem Fertigungswerkzeug, insbesondere dem Stößel, antriebstechnisch gekoppelt, und, andererseits, am Rahmen befestigt sein kann.

Als Antrieb soll insbesondere eine, beispielsweise am Pressenrahmen befestigte, konstruktive Einheit verstanden werden, durch welche mittels einer Umwandlung von z.B. fluidischer, hydraulischer, elektrischer und/oder pneumatischer Energie in mechanische Energie Fertigungsoperationen ausführbar sind, beispielsweise umfassend den Betrieb des Stößels oder eines Bearbeitungswerkzeugs zur Ausführung von Arbeitsbewegungen.

In Ausgestaltungen kann ein Pressenmodul ferner einen dem Pressenstößel zugeordneten, innerhalb des Pressenrahmens ausgebildeten und zur Werkstückbearbeitung eingerichteten Arbeitsraum umfassen.

Als Fertigungsraum soll insbesondere dasjenige Volumen verstanden werden, in welchem ein Fertigungsmodul eine dem Fertigungsmodul zugeordnete Fertigungsoperation ausführt bzw. ausführen kann. Der Fertigungsraum kann beispielsweise durch einen Rahmen des Fertigungsmoduls begrenzt, insbesondere umschlossen, sein. Unter einem Fertigungsmodul soll insbesondere eine separat betreibbare/steuerbare Einheit verstanden werden, die dazu eingerichtet ist eine vorgegebene Fertigungsoperation bei einem Werkstück innerhalb einer Fertigungslinie auszuführen.

Ein Pressenmodul kann ferner einen dem Pressenstößel bezüglich des Arbeitsraums gegenüberliegend oder in einem vorgegebenen Winkel zum Pressenstößel angeordneten Pressentisch, und/oder zumindest einen dem Pressenstößel gegenüberliegend oder in einem vorgegebenen Winkel zum Pressenstößel angeordneten weiteren Pressenstößel, oder ein Ziehkissen umfassen.

In Ausgestaltungen kann z.B. das Pressenmodul ferner eine Handhabungseinrichtung (oder: Transporteinrichtung) für Werkstücke umfassen. Die Handhabungseinrichtung kann die weitere Handhabungseinheit zumindest einen ersten Manipulator für Werkstücke umfassen. Die weitere Handhabungseinheit, kann insbesondere derart ausgebildet sein, dass Werkstücke im Arbeitstakt des Fertigungsmoduls, z.B. Pressenmoduls, in und aus dem Fertigungsraum, z.B. Arbeitsraum, bewegt bzw. transportiert werden können. Insbesondere kann die weitere Handhabungseinheit dazu eingerichtet sein, Werkstücke in den Fertigungsraum hinein und daraus heraus, insbesondere in Werkstückflussrichtung bzw. Werkstücktransportrichtung in Fertigungsrichtung längs der Fertigungslinie, z.B. eines Pressenmoduls bzw. einer Pressenlinie, zu bewegen.

Die weitere Handhabungseinheit (auch: erste Handhabungseinheit) kann in Ausgestaltungen zumindest teilweise in zumindest einer an einem Rahmen des Fertigungsmoduls, z.B. im oder am Pressenrahmen, vorgesehenen Ausnehmung angeordnet, und am Rahmen befestigt, z.B. angeflanscht, sein.

Die Ausnehmung kann an den Fertigungsraum, z.B. Arbeitsraum, anschließend, insbesondere unmittelbar daran anschließend und vorzugsweise mit dem Fertigungsraum kommunizierend, ausgebildet sein. Bei einem Umformmodul kann sich die Ausnehmung quer zur Bewegungsachse des Stößels, insbesondere quer zur Beschickungsrichtung bzw. quer zu der für den Fertigungsraum oder Arbeitsraum definierten Werkstücktransportrichtung, lateral nach außen erstrecken. Durch eine entsprechende Ausnehmung kann für die weitere Handhabungseinrichtung, insbesondere den Manipulator, ausreichend Freiraum für Montage und zur Ausführung von Arbeitsbewegungen erzielt werden.

Entsprechend Ausgestaltungen kann das vorgeschlagene Fertigungsmodul, insbesondere Pressenmodul, in einer ersten Betriebsart als eigenständige Funktionseinheit bzw. Bearbeitungseinheit zur Werkstückbearbeitung betrieben werden bzw. eingerichtet sein, und kann in einer zweiten Betriebsart als modular integrierte Funktionseinheit einer Fertigungslinie, insbesondere Pressenlinie, mit mehreren modular bestückbaren Fertigungsmodulstellplätzen, Pressenmodulstellplätzen, und Bearbeitungsstationen betrieben werden bzw. eingerichtet sein.

Als eigenständige Funktionseinheit in der ersten Betriebsart kann ein jeweiliges Fertigungsmodul z.B. zur Werkstückbearbeitung mit integriertem Werkstücktransport eingerichtet sein, so dass das Fertigungsmodul insbesondere mit eigener Steuerung in Alleinstellung betreibbar ist, sei es zur Werkstückbearbeitung oder zum Betrieb als sog. Erprobungs- oder Try-Out-Fertigungsmodul, beispielsweise zum Einrichten bzw. Einfahren eines Fertigungswerkzeugs usw..

Das Fertigungsmodul kann in der zweiten Betriebsart als eigenständige Funktionseinheit so ausgebildet werden bzw. sein, dass dieses als Ganzes, d.h. als Modul bzw. funktionsfertige Einheit, in eine entsprechende Fertigungsposition, beispielsweise Arbeitsposition, bzw. an einen entsprechenden Fertigungsmodulstellplatz innerhalb der Fertigungslinie eingesetzt bzw. entnommen werden kann. Eine Entnahme bzw. ein Austausch eines Fertigungsmoduls kann beispielsweise im Zusammenhang mit Wartungs- oder Reparaturarbeiten erfolgen, wobei ein zu wartendes oder reparierendes Fertigungsmodul entnommen, und durch ein identisch aufgebautes Ersatzfertigungsmodul ersetzt werden kann. Ferner ist es möglich, dass ein in eine Fertigungslinie modular austauschbar integriertes Fertigungsmodul der Fertigungslinie entnommen, und durch eine andere Bearbeitungseinheit oder Bearbeitungszelle, z.B. ein identisch aufgebautes Fertigungsmodul, ersetzt wird. Eine Bearbeitungseinheit zum modularen Austausch für ein Fertigungsmodul kann z.B. eingerichtet sein für Bearbeitungsoperationen, wie z.B. Fügen, Kleben, Prüfen, Schweißen, Markieren, Laserbearbeiten, 3D-Drucken usw..

Hinsichtlich des Werkstücktransports kann die weitere Handhabungseinheit beispielsweise so ausgebildet sein, dass Werkstücke innerhalb der Fertigungslinie beispielsweise von einem im Werkstückfluss stromaufwärts (entgegen der Fertigungsrichtung längs der Fertigungslinie) gelegenen weiteren Fertigungsmodul, bzw. in Richtung eines im Werkstückfluss stromabwärts (in Fertigungsrichtung längs der Fertigungslinie) gelegenen weiteren Fertigungsmodul transportiert werden können.

In Ausgestaltungen kann die Fertigungslinie mehreren, gemäß einer hierin vorgeschlagenen Ausgestaltung ausgebildeten Fertigungsmodulen umfassen, wobei alle, oder zumindest eine Gruppe von Fertigungsmodulen, beispielsweise Umform- oder Pressenmodulen, zumindest teilweise oder im Wesentlichen vollständig identisch aufgebaut sind. Dadurch können Vorteile hinsichtlich Wartung, Ersatzteillagerung, Bereitstellung von Ersatzpressenmodulen, Austauschbarkeit und dergleichen erreicht werden.

Beispielsweise können mehrere, z.B. zumindest zwei, der der Fertigungsmodule, z.B. Pressenmodule, oder gar alle Fertigungsmodule, beispielsweise hinsichtlich des Rahmens, und/oder hinsichtlich weiterer Komponenten wie z.B. Stößel, Antrieb, Fertigungswerkzeuge usw., identisch aufgebaut sein, so dass die Fertigungsmodule, z.B. Umform- oder Pressenmodule, an beliebigen Arbeitspositionen innerhalb der Fertigungslinie, insbesondere Umform- oder Pressenlinie, verwendbar bzw. einsetzbar sind.

Pressenmodule können sich innerhalb einer Pressenlinie durch das jeweils eingesetzte Werkzeug und/oder durch den jeweils verwendeten Antrieb unterscheiden, und können im Übrigen insbesondere im Wesentlichen identisch ausgebildet und aufgebaut sein, z.B. hinsichtlich Größe, Abmessungen, Steuerung, mechanische und elektrische bzw. elektronische Installationsschnittstellen usw..

Durch einen wie hierin vorgeschlagenen modularisierten Aufbau kann erreicht werden, dass eine Fertigungslinie in vergleichsweise einfacher Weise aufgebaut, eingerichtet und/oder umgerüstet werden kann. Beispielsweise ist es vergleichsweise einfach, die Bearbeitungsart und/oder -reihenfolge bei Werkstücken zu verändern. Ferner kann in einfacher Weise eine Fertigungslinie für ein anderes herzustellendes Werkstück bzw. Produkt umgerüstet werden.

Zu Wartungszwecken und/oder Reparaturzwecken kann beispielsweise ein jeweiliges modular austauschbar integriertes Fertigungsmodul aus der Fertigungslinie entnommen, z.B. seitlich herausgefahren, werden, und, entweder vor Ort bei verbesserter Zugänglichkeit für die Komponenten des Fertigungsmoduls repariert/gewartet werden. Alternative kann, bedingt durch den modularen Aufbau, ein funktionstüchtiges Ersatzfertigungsmodul eingesetzt, bzw. eingeschoben, werden, so dass die Fertigungslinie weiter betrieben, und das entnommene Fertigungsmodul außerhalb des Fertigungsverbunds bzw. außerhalb der Fertigungslinie repariert/gewartet werden kann.

Die Fertigungslinie kann nach Einsetzen eines Ersatz- oder Austauschfertigungsmoduls wieder in Betrieb genommen werden, so dass durch den hierin vorgeschlagenen austauschbar modularen Aufbau der einer Fertigungslinie, die Stillstandszeiten minimiert, und der Gesamtanlagendurchsatz verbessert werden können.

In Ausgestaltungen kann die zumindest eine Ausnehmung, in welcher die weitere Handhabungseinheit bzw. der erste Manipulator zumindest teilweise angeordnet bzw. betreibbar ist, eine in Draufsicht auf die Breitseite des Fertigungsmoduls, insbesondere Umform- oder Pressenmoduls, C-förmige Form aufweisen, die zum Fertigungs- oder Arbeitsraum hin offen ausgebildet ist. Insbesondere kann die Ausnehmung durch den Rahmen, insbesondere Pressenrahmen, an drei Umfangsseiten begrenzt, und dadurch zum Fertigungs- oder Arbeitsraum hin offen ausgebildet sein.

Vorzugsweise ist die Ausnehmung mit dem Fertigungs- oder Arbeitsraum kommunizierend ausgebildet, wodurch sich insbesondere Vorteile hinsichtlich des verfügbaren Bewegungsraums für weitere Handhabungseinrichtung und entsprechend der Werkstücke ergeben.

In Ausgestaltungen kann die zumindest eine Ausnehmung als ein den Rahmen in Richtung senkrecht zur Breitseite des Fertigungsmoduls durchgreifender Durchbruch ausgebildet sein. Vorzugsweise ist jede der Ausnehmungen als ein solcher Durchbruch ausgebildet.

Entsprechend ausgebildete Ausnehmungen ermöglichen den Aufbau eines vergleichsweise stabilen, geschlossenen Rahmens, der ausreichend Platz zur Aufnahme von Manipulatoren, wie z.B. Greifern und zugehörige Transporteinrichtungen, wie z.B. Linearführungen, Drehführungen, Roboterarme und dergleichen bietet.

In Ausgestaltungen kann beiderseits lateral des Arbeitsraums jeweils eine der Ausnehmungen ausgebildet sein. Die Ausnehmungen können beispielsweise symmetrisch zur Achse des Fertigungsmoduls ausgebildet sein. In jeder der Ausnehmungen kann eine entsprechende weitere Handhabungseinheit, insbesondere ein erster Manipulator, angeordnet sein, so dass ein im Arbeitsraum befindliches Werkstück an lateral gegenüberliegenden Seiten gegriffen, und z.B. in Richtung des Werkstückflusses, d.h. in Werkstückflussrichtung, transportiert werden kann.

Insbesondere kann die weitere Handhabungseinheit derart ausgebildet sein, dass ein Werkstück von der Ablageposition in die jeweilige, im Arbeitsraum befindliche Fertigungs- oder Bearbeitungsposition, z.B. auf ein entsprechendes Unterwerkzeug, und nach Bearbeitung, z.B. Umformung usw., von der Fertigungs- oder Bearbeitungsposition, z.B. vom Werkzeug, zu einer Ablageposition beispielsweise eines nachgeschalteten Fertigungsmoduls oder einer nachgeschalteten Fertigungs- oder Arbeitsposition, Bearbeitungsstation oder Bearbeitungszelle überführt werden kann.

In Ausgestaltungen kann in jeder der Ausnehmungen eine weitere Handhabungseinheit (auch: erster Manipulator) vorhanden sein, wobei die weiteren Handhabungseinheiten jeweils am Rahmen befestigt sein können. Ein Vorteil der am Fertigungsmodul integrierten weiteren Handhabungseinrichtungen kann insbesondere darin gesehen werden, dass diese vor Integration in die Fertigungslinie bereits betriebsbereit eingerichtet sein/werden können, so dass bei einem Tausch oder Wechsel im Wesentlichen kein zusätzlicher (Montage-)Aufwand für das Einrichten und Eintakten erforderlich ist.

In Ausgestaltungen kann die weitere Handhabungseinheit zumindest ein zum Greifen eines Werkstücks ausgebildetes, beispielsweise mechanisch, pneumatisch, magnetisch, und/oder adhäsiv arbeitendes, Greiforgan umfassen. Das Greiforgan kann mit einer oder mehreren Aktuatoreinheiten (oder: Antriebseinheiten) gekoppelt sein, wobei die zumindest eine Aktuatoreinheit eine Bewegung des Greiforgans in zumindest zwei, oder zumindest drei verschiedene Bewegungsrichtungen bzw. Raumrichtungen ermöglicht.

Die zumindest eine Aktuatoreinheit kann beispielsweise eine oder mehrere Linearaktoreinheiten umfassen, welche eine Bewegung des Greiforgans in drei, insbesondere zueinander senkrechte, Raumrichtungen ermöglichen. Abgesehen davon sind auch Aktuatoren einsetzbar, welche eine rotatorische oder kombiniert rotatorisch-lineare Bewegung eines Werkstücks ermöglichen.

Als Bewegungsrichtungen (oder: Bewegungsfreiheitsgrade) für das Greiforgan kommen beispielsweise in Betracht: parallel zur Beschickungsrichtung, parallel zur Arbeitsachse des jeweiligen Fertigungsmoduls, beispielsweise parallel zur Bewegungsrichtung des Stößels eines Umformmoduls, und senkrecht zur Arbeitsachse des jeweiligen Fertigungsmoduls, bzw. Beschickungsrichtung, insbesondere derart, dass ein Anheben oder Absenken, und Weitertakten eines Werkstücks möglich ist.

Ausgestaltungen der Erfindung betreffen ferner ein Pressenmodul gemäß den nachfolgenden Ausführungen, wobei das Pressenmodul der weiter oben beschriebenen Ausgestaltungen entsprechend der nachfolgenden Ausführungen eingerichtet sein.

Das Pressenmodul ist wie das bereits beschriebene Pressenmodul zur Bearbeitung von Werkstücken vorgesehen. Die Bearbeitung kann dabei, wie bereits erwähnt, Bearbeitungsoperationen wie Umformen, insbesondere Kaltumformung, Halbwarmumformung und Warmumformung, Fließpressen, Stanzen, Schneiden, Fügen, Verbinden, Kalibrieren, etc., insbesondere beliebige Kombinationen daraus, umfassen. Das Pressenmodul kann zur Bearbeitung von Werkstücken aus Metall, z.B. Blech, oder von Werkstücken, die zumindest teilweise aus Metall bestehen, sowie von Werkstücken, die aus mehreren gleichen oder unterschiedlichen Materialien bestehen oder kombiniert sind, eingerichtet sein.

Das Pressenmodul ist eingerichtet zur modularen Integration in eine Pressenlinie (oder: Pressenstraße) mit mehreren Bearbeitungsstationen, wobei jede Bearbeitungsstation jeweils ein separates Pressenmodul umfassen kann. Insbesondere kann ist das Pressenmodul eingerichtet zur modularen Integration bzw. Installation an einem Pressenmodulstellplatz einer Pressenlinie, der modular austauschbar mit Pressenmodulen bestückbar ist.

Das Pressenmodul kann einen, insbesondere umfangsseitig geschlossenen, Pressenrahmen, und einen am Pressenrahmen bewegbar, insbesondere hin-und-her bewegbar, montierten und zur Werkstückbearbeitung ausgebildeten Pressenstößel umfassen.

Das Pressenmodul kann ferner einen Antrieb umfassen, der, einerseits, mit dem Pressenstößel antriebstechnisch gekoppelten ist, und, andererseits, am Pressenrahmen befestigt ist. Der Antrieb kann eine pneumatische, elektrische, und/oder hydraulische Antriebseinheit, insbesondere eine beliebige Kombination der genannten Antriebskonzepte, umfassen, mit welcher pneumatische, elektrische, und/oder hydraulische Energie in mechanische Bewegungsenergie zum Bewegen des Stößels umgewandelt werden kann.

Das Pressenmodul umfasst ferner einen dem Pressenstößel zugeordneten, innerhalb des Pressenrahmens ausgebildeten und zur Werkstückbearbeitung eingerichteten Arbeitsraum. Ferner kann das Pressenmodul einen zum Pressenstößel bezüglich des Arbeitsraums gegenüberliegend oder in einem vorgegebenen Winkel dazu angeordneten Pressentisch, weiteren Pressenstößel, oder ein Ziehkissen umfassen.

Das Pressenmodul umfasst ferner eine bzw. die Handhabungseinrichtung (oder: Transporteinrichtung ) für Werkstücke, mit einer in Form der Handhabungseinheit ausgebildeten zweiten Handhabungseinheit mit zumindest einem, an einer quer, insbesondere senkrecht, zur Beschickungsrichtung, oder quer, insbesondere senkrecht, zur Entschickungsrichtung des Pressenmoduls bzw. des Arbeitsraums, gelegenen Breitseite des Pressenrahmens angeordneten, insbesondere am Pressenrahmen befestigten, und dem Arbeitsraum vor- oder nachgeschalteten zweiten Manipulator (insbesondere: Verschiebeschlitten).

In Ausgestaltungen kann die Handhabungseinheit (auch: zweite Handhabungseinheit) beispielsweise derart eingerichtet sein, dass diese den Gang der Werkstücke in dem zum Fertigungs- oder Arbeitsraum vor- oder nachgeschalteten Bereich des Fertigungskanals einer Fertigungslinie unterstützt bzw. festlegt. Beispielsweise kann die Handhabungseinheit mit der oder den weiteren Handhabungseinheiten in synchroner Weise betrieben werden, so dass ein Werkstücktransport zwischen den Fertigungs- oder Arbeitsräumen zweier unmittelbar aufeinanderfolgenden Fertigungsmodule möglich ist. Insbesondere kann die Handhabungseinheit als eine Art Zwischenablage ausgebildet sein oder betrieben bzw. eingesetzt werden, so dass an der Zwischenablage z.B. Werkstücke zwischen zwei Bearbeitungsstationen, insbesondere im Rahmen eines getakteten Transports der Werkstücke entlang der Fertigungs- oder Bearbeitungslinie, abgelegt werden können, beispielsweise bevor die Werkstücke einer nachgeschalteten Fertigungs- oder Bearbeitungsstation zugeführt werden.

In Ausgestaltungen kann der zumindest eine zweite Manipulator zumindest eine dem Arbeitsraum in Bearbeitungsrichtung vor- oder nachgeschaltete, und vorzugsweise an der Breitseite ortsfest angebrachte Werkstückablage umfassen. Die Werkstückablage kann beispielsweise derart angeordnet und eingerichtet sein, dass in einer Pressenlinie ein Werkstück vom Arbeitsraum durch einen ersten Manipulator eines Pressenmoduls auf die Werkstückablage abgelegt werden kann. Von der Ablage kann das Werkstück beispielsweise ein Manipulator einer nachfolgenden Bearbeitungsstufe, insbesondere ein erster Manipulator eines nachfolgenden Pressenmoduls, gegriffen, und im Arbeitstakt der Pressenlinie weiterbewegt werden. Insbesondere kann ein Werkstück von der Ablage in den Arbeitsraum eines nachfolgenden Pressenmoduls überführt werden.

Durch Zwischenablage eines Werkstücks und einem korrespondierenden Betrieb, insbesondere der ersten Manipulatoren, kann im Rahmen des hierin vorgeschlagenen modularen Aufbaus ein getakteter Betrieb zum Transport von Werkstücken entlang der Fertigungs- oder Bearbeitungslinie umgesetzt werden. Auch bei Austausch eines Fertigungsmoduls kann bei Verwendung der vorgeschlagenen Zwischenablage ein entsprechend getakteter Transport von Werkstücken in einfacher Weise wieder eingerichtet werden, insbesondere wenn die Handhabungseinheit am Fertigungsmodul, beispielsweise am Rahmen, montiert ist, und mit dem Fertigungsmodul eine funktionsfertige Einheit zur Verwendung in einer Fertigungslinie bildet. Ferner können Vereinfachungen im Hinblick auf Konstruktion und Funktion der weiteren Handhabungseinrichtung erreicht werden.

In Ausgestaltungen kann der zumindest eine Verschiebeschlitten (auch: zweite Manipulator) parallel zur Breitseite und quer zur Beschickungsrichtung verschiebbar angebracht, und dem Fertigungs- oder Arbeitsraum in Fertigungs- bzw. Bearbeitungsrichtung längs der Fertigungslinie vor- oder nachgeschaltet sein. Mit dem Verschiebeschlitten kann ein Werkstück vom Fertigungsraum (auch: Arbeitsraum) weg lateral nach außen oder zum Fertigungsraum hin nach innen bewegt werden. In Ausgestaltungen können genau zwei Verschiebeschlitten vorhanden sein. In weiteren Ausgestaltungen kann an lediglich einer Breitseite eine Handhabungseinheit vorhanden, insbesondere am Rahmen befestigt sein, oder es kann an beiden gegenüberliegenden Breitseiten jeweils zumindest eine Handhabungseinheit vorhanden, insbesondere am Rahmen befestigt sein. Die Handhabungseinheiten können zumindest teilweise oberhalb oder unterhalb des Fertigungs- oder Arbeitsraums gelegen und montiert sein. Der Verschiebeschlitten und zugehörige Komponenten können beispielsweise am Pressenrahmen befestigt sein, so dass bei Austausch eines Pressenmoduls einer Pressenlinie auch entsprechende Handhabungseinheiten, Manipulatoren usw. mit ausgetauscht werden können.

Der Verschiebeschlitten kann beispielsweise derart eingerichtet sein, dass Werkstücke, insbesondere Werkstückstadien, z.B. während des Betriebs einer Fertigungslinie entnommen werden können, beispielsweise zu Prüfzwecken und dgl.. Beispielsweise können durch die lateral verschiebbaren Verschiebeschlitten entsprechende Werkstückstadien seitlich, d.h. lateral, aus der Fertigungslinie ausgeschleust werden.

Dazu kann z.B. die weitere Handhabungseinheit ein Werkstück auf einen Verschiebeschlitten ablegen, und der Verschiebeschlitten kann daraufhin das Werkstück lateral nach außen, beispielsweise zur Entnahme, transportieren. Gleichzeitig kann ein weiterer Schiebeschlitten in den Bereich des Arbeitsraums zu Ablagezwecken gefahren werden, so dass der getaktete Betrieb der Fertigungslinie, insbesondere Pressenlinie, weitergeführt werden kann.

Ferner ist es möglich, über einen entsprechenden Verschiebeschlitten für die Werkstückfertigung oder -bearbeitung benötigte (zusätzliche) Teile oder Komponenten, wie z.B. Gewindeelemente oder sonstige Elemente zur Herstellung von Kompositbauteilen aus mehreren verschiedenen Werkstoffen, dem Fertigungs- oder Arbeitsraum zuzuführen. Insbesondere können entsprechende Komponenten seitlich, d.h. lateral, in die Fertigungs- oder Bearbeitungslinie eingeschleust werden.

In Ausgestaltungen kann der zumindest eine zweite Manipulator zumindest zwei Verschiebeschlitten umfassen, die mit einer Verschiebeeinheit, insbesondere einer Linearverschiebungseinheit, jeweils, insbesondere synchronisiert, an einer am Arbeitsraum gelegenen ersten Position und an einer vom Arbeitsraum lateral abgewandten zweiten Position, insbesondere einer lateral zumindest teilweise außerhalb des Pressenrahmens gelegenen zweiten Position, positionierbar sind.

Durch die Bereitstellung von zwei, insbesondere synchron, oder auch asynchron bewegbaren, Verschiebeschlitten ist es, wie bereits angedeutet, möglich, etwaige zusätzliche Komponenten zuzuführen oder Werkstücke bzw. Werkstückstadien zu entnehmen ohne dass eine veränderte Taktung der Pressenmodule innerhalb einer Pressenlinie erforderlich wäre.

In Ausgestaltungen kann einer der Verschiebeschlitten als Ablage am Fertigungs- oder Arbeitsraum positioniert sein, während der zweite Verschiebeschlitten lateral außen positioniert ist, um z.B. ein Werkstück auszuschleusen, oder um dort z.B. mit zusätzlichen Komponenten bestückt zu werden.

Die Ablageeinheit bzw. der erste oder zweite Verschiebeschlitten kann/können in Ausgestaltungen mit einer oder mehreren zusätzlichen Prozessfunktionen bzw. Fertigungszwischenschritten verknüpft sein, wie beispielsweise: Werkstück drehen, Werkstück markieren, und andere. Insbesondere ist es auf Grundlage der Handhabungseinheit möglich, zusätzliche Fertigungszwischenschritte, z.B. zwischen zwei Umformoperationen zweier aufeinanderfolgender Pressenmodule in z.B. einer Pressenlinie, zu integrieren.

In Ausgestaltungen kann der Rahmen eines Fertigungsmoduls, insbesondere Pressenmoduls, lateralseitig, d. h. an einer Lateralseite quer zur Beschickungsrichtung auf Höhe des Fertigungs- oder Arbeitsraums zumindest einen mit dem Fertigungs- oder Arbeitsraum kommunizierenden lateralen Durchbruch aufweisen, wobei der zumindest eine laterale Durchbruch zusammen mit den Arbeitsraum einen sich in lateraler Richtung, d.h. quer zur Beschickungsrichtung/Arbeitsachse, erstreckenden Kanal ausbilden, der derart ausgebildet ist, dass ein im Fertigungs- oder Arbeitsraum befindliches Werkzeug, das beispielsweise mit einem Pressenstößel, einem Pressentisch oder einem Gegenstößel gekoppelt sein kann, in lateraler Richtung, insbesondere quer zur Beschickungsrichtung, entnommen, eingesetzt, gewechselt und/oder ausgetauscht werden kann.

In Ausgestaltungen kann der Rahmen zwei laterale Durchbrüche aufweisen, die an gegenüberliegenden Lateralseiten des Pressenrahmens und jeweils mit dem Arbeitsraum kommunizierend ausgebildet sind. Die beiden lateralen Durchbrüche können zueinander fluchtend und derart ausgebildet, dass ein Werkzeug von einer Lateralseite aus entnommen bzw. eingesetzt, und dass von der gegenüberliegenden Lateralseite ein anderes Werkzeug eingesetzt bzw. entnommen werden kann.

In Ausgestaltungen können die beiden lateralen Durchbrüche bei lateraler Draufsicht, insbesondere betrachtet in Ebenen parallel zur Beschickungsrichtung und Bewegungsrichtung des Pressenstößels, im Wesentlichen den gleichen Querschnitt aufweisen. Mittels des oder der Durchbrüche kann ein Werkzeugwechsel in vergleichsweise einfacher Art und Weise durchgeführt werden, wobei ein Werkzeugwechsel alternativ auch durch Austausch eines ganzen bzw. kompletten Fertigungsmoduls, z.B. eines kompletten Pressenmoduls, erfolgen kann, was auf Grund des hierin vorgeschlagenen austauschbar modularen Aufbaus vergleichsweise einfach möglich ist.

In Ausgestaltungen kann zumindest einem des zumindest einen lateralen Durchbruchs eine, vorzugsweise am Rahmen, insbesondere Pressenrahmen, lateralseitig befestigte, Transfereinheit zugeordnet sein, welche eingerichtet ist zur Unterstützung bzw. Durchführung eines, beispielswiese manuellen, semiautomatischen, oder automatischen, Werkzeugwechsels. Beispielsweise kann die Transfereinheit zur Unterstützung eines Werkzeugwechsels an einem Pressenstößel und/oder Pressentisch ausgebildet sein. Die Transfereinheit kann in Ausgestaltungen eine, insbesondere nach Art einer Rollenbahn ausgebildete, lateral vom Rahmen, insbesondere etwa waagrecht, vorspringende Fördereinheit umfassen, durch welche z.B. ein Werkzeug zum Arbeitsraum hin oder davon weg bewegt werden kann.

In Ausgestaltungen kann der Pressenrahmen zumindest an einer Breitseite, insbesondere einer zur (Werkzeug-)Beschickungsrichtung senkrechten Seite des Pressenrahmens, in dem sich an den Arbeitsraum anschließenden Bewegungsbereich des Pressen-stößels offen ausgebildet sein. Vorzugsweise ist der Pressenrahmen beidseitig offen, d.h. der Pressenrahmen ist im Bewegungsbereich des Pressenstößels vorzugsweise durchbrochen, und weist beispielsweise einen den Pressenrahmen durchsetzenden Durchbruch auf. Basierend auf der beschriebenen offenen Ausbildung der Breitseite bzw. mittels der Durchbrüche kann eine verbesserte Zugänglichkeit für den Pressenstößel und darüber hinaus zum Arbeitsraum und/oder zu den im oder im Bereich des Arbeitsraums montierten Werkzeugen und anderen Komponenten, wie z.B. Manipulatoren, Handhabungseinheiten und dergleichen erreicht werden.

In Ausgestaltungen kann das Pressenmodul des Weiteren eine mechanische Verbindungseinheit (oder: Schnittstelle) umfassen, wobei die Verbindungseinheit eingerichtet ist zum austauschbar mechanischen Koppeln des modular austauschbaren Pressenmoduls mit einer, insbesondere vorgegebenen, Plattform (oder: einem Sockel oder einer Gegenschnittstelle), die einer Pressenlinie zugeordnet ist, oder von dieser umfasst ist, wobei die Plattform mehrere, mit Pressenmodulen modular bestückbare Pressenmodulstellplätze umfasst bzw. definiert, wobei die Pressenmodulstellplätze zur, insbesondere modularen, austauschbaren Positionierung und Einrichtung von Pressenmodulen in der Pressenlinie, insbesondere in einem Pressenmodulverbund, ausgebildet sind.

Basierend auf einer entsprechend eingerichteten Plattform kann ein Pressenmodul vergleichsweise einfach in die Pressenlinie integriert und/oder gewechselt werden, beispielsweise zu Wartungs- oder Reparaturzwecken. Die Stillstandszeit der Pressenlinie kann minimiert und der Werkstückdurchsatz kann optimiert werden.

In Ausgestaltungen kann eine Verbindungseinheit, insbesondere Schiebeschnittstelle, bzw. die Plattform vorhanden sein, die derart ausgebildet und eingerichtet ist, dass diese ein Einschieben oder Austauschen eines Fertigungsmoduls an einem modular bestückbaren Fertigungsmodulstellplatz, bzw., allgemeiner formuliert, an einen modular bestückbaren Fertigungs- oder Bearbeitungsstellplatz in einer Fertigungslinie, z.B. einer Pressenlinie, ermöglicht. Die Verbindungseinheit/Plattform kann dazu eingerichtet sein, die Reihenfolge aufeinanderfolgender Fertigungsmodule und/oder Fertigungs- oder Bearbeitungsstationen zu ändern, beispielsweise durch Vertauschen zweier oder mehrerer Fertigungsmodule, und/oder den durch Veränderung des Abstands zweier aufeinanderfolgender Fertigungsmodule und/oder Fertigungs- oder Bearbeitungsstationen der Fertigungslinie.

In Ausgestaltungen kann die Steuerschnittstelle und korrespondierende Komplementärsteuerschnittstelle eingerichtet sein zur Übertragung von elektrischer Energie zum Fertigungsmodul und/oder zur Übertragung und/oder Austausch von Betriebsparametern oder Steuerparametern.

Mit korrespondierenden Schnittstellen können der Austausch/Wechsel eines Fertigungsmoduls in einer Fertigungslinie, insbesondere die Entnahme und das Einsetzen eines Fertigungsmoduls, sowie beispielsweise die steuerungstechnische Einbindung eines Fertigungsmoduls in eine Fertigungslinie bzw. die steuerungstechnische Trennung eines Fertigungsmoduls von der Fertigungslinie, vereinfacht werden.

Betriebsparameter und/oder Steuerparameter zur Steuerung des Fertigungsmoduls können beispielsweise über eine Datenverbindung mit einem übergeordneten Steuerrechner und/oder lokalen oder entfernten Datenspeicher, insbesondere uni- oder bidirektional, ausgetauscht werden.

Am Fertigungsmodul erfasste Betriebs- und Prozessparameter, wie z.B. Umformdrücke, Press- und Prozesswerte, können am jeweiligen Fertigungsmodul verarbeitet bzw. verwendet werden, und/oder an eine übergeordnete Rechnereinheit, Steuerung, insbesondere eine mit dem Fertigungsmodul über eine Datenübertragungsverbindung verbundene Rechnereinheit übertragen werden, beispielsweise zu Bearbeitungs-, Verarbeitungs-, und Auswertungszwecken.

Aufgrund des modularen Aufbaus der hierin vorgeschlagenen Fertigungslinie, insbesondere Pressenlinie, mit mehreren einzelnen Fertigungsmodulen, insbesondere Pressenmodulen, an entsprechenden modular bestückbaren Fertigungsmodulstellplätzen, insbesondere Pressenmodulstellplätzen, bzw. Bearbeitungseinheiten an entsprechenden modular bestückbaren Bearbeitungsstellplätzen, ist es insbesondere möglich, Betriebs- und Fertigungsparameter für einzelne Werkstückstadien an den jeweiligen Fertigungsmodulen, insbesondere Pressenmodulen oder Bearbeitungseinheiten gesondert zu ermitteln und/oder gesondert einzustellen bzw. einzurichten.

Insbesondere können bei den hierin vorgeschlagenen Fertigungsmodulen, die in Ausgestaltungen lediglich eine Fertigungs- oder Bearbeitungsstufe umfassen, Prozessparameter für einzelne Fertigungs- oder Bearbeitungsstufen einzeln erfasst und/oder eingestellt werden, wodurch sich die vorgeschlagene modulare Konfiguration mit einzelnen Fertigungsmodulen von herkömmlichen Fertigungslinien, z.B. Großstufenpressen, unterscheidet, bei welchen mehrere Bearbeitungsstufen durch zwangsweise gekoppelte Bewegungsabläufe in einem einheitlichen Fertigungsraum durchgeführt werden. Bei Großstufenpressen oder Mehrstufenpressen können beispielsweise Press- und Prozessparameter für einzelne Press-Bearbeitungsstufen nicht gesondert erfasst werden. Insoweit bietet der vorgeschlagene modulare Aufbau insbesondere Vorteile im Hinblick auf Prozess- und Qualitätskontrolle. Im Gegensatz zu solchen Großstufenpressen können die Fertigungsschritte der hierin vorgeschlagenen Fertigungslinie im Rahmen einer Taktung im Wesentlichen entkoppelt durchgeführt werden, so dass eine Prozess- und Qualitätskontrolle für einzelne Fertigungsschritte und - operationen möglich wird.

Davon abgesehen, erfordern beispielsweise herkömmliche Großstufenpressen oder Mehrstufenpressen, im Unterschied zu dem hierin vorgeschlagenen modularen Aufbau, vergleichsweise schwere und massive Stößel. Mit dem hierin vorgeschlagenen modularen Aufbau ist es im Zusammenhang mit Pressenmodulen im Vergleich zu herkömmlichen Großstufenpressen oder Mehrstufenpressen insbesondere möglich, die durch die Stößel definierte, und zur Durchführung mehrerer Bearbeitungsschritte erforderliche bewegte Masse pro Bearbeitungsstufe zu reduzieren, woraus Energieeinsparungen resultieren können.

Ferner können mit dem modularen Aufbau u.a. Vorteile im Hinblick auf die Genauigkeit bzw. Feinheit der Steuerung der Fertigungsschritte, beispielsweise der Stößel erreicht werden. Beispielsweise können mehrere vergleichsweise kleine Stößel einzelner Bearbeitungsstufen ggf. einfacher und genauer gesteuert werden als ein alle Bearbeitungsstufen einschließender großer Stößel.

In Ausgestaltungen kann eine Pressenlinie mit mehreren, zumindest jedoch zwei, entlang einer Bearbeitungslinie angeordneten Pressenmodulen vorgesehen sein. Die Pressenmodule können entsprechend einer der hierin beschriebenen Ausgestaltungen entsprechend eines Fertigungsmoduls der Erfindung ausgebildet sein. Insbesondere können die Pressenmodule die Handhabungseinrichtung aufweisen und/oder mit einer entsprechenden Plattform mit mehreren modular austauschbar bestückbaren Pressenmodulstellplätzen austauschbar gekoppelt sein.

Die hierin vorgeschlagene Modularisierung betrifft insbesondere die mechanische Einbindung bzw. Integration eines Fertigungsmoduls sowie die steuerungstechnische Integration eines modular austauschbaren Fertigungsmoduls.

Insbesondere ist es durch die Modularisierung möglich, die reparatur- oder wartungsbedingten Stillstandszeiten der Fertigungslinie zu verringern, denn beispielsweise kann ein defektes Fertigungsmodul entnommen und in einfacher Weise gegen ein funktionstüchtiges Austauschfertigungsmodul ausgetauscht werden. Eine Reparatur des defekten Fertigungsmoduls kann z.B. außerhalb der Fertigungslinie erfolgen, zu Zeiten in denen die Fertigungslinie mit dem Austauschfertigungsmodul betrieben wird. Mithin ergeben sich vorteilhafte Betriebszeiten und Werkstückdurchsätze.

Jedoch ist nicht nur ein Austausch zu Wartungs-, Reparatur- oder Reinigungszwecken möglich. Der vorgeschlagene modulare Aufbau und die hierin vorgeschlagene Modularisierung ermöglichen es ferner, Bearbeitungsplätze der Fertigungslinie variabel zu bestücken.

Ferner ermöglicht die vorgeschlagene Modularisierung eine vergleichsweise einfache steuerungstechnische Einrichtung von Fertigungsmodulen, sei es bei Verwendung als Einzelfertigungsmodul, oder bei Verwendung in einem Fertigungsverbund innerhalb einer modular aufgebauten Fertigungslinie.

In Ausgestaltungen kann die Fertigungslinie mehrere, zumindest jedoch zwei, Montagesockel umfassen, die ausgebildet sind zur austauschbaren Aufnahme eines Fertigungsmoduls, wobei ein jeweiliges Fertigungsmodul eine zum mechanischen Ankoppeln an den Montagesockel ausgebildete Montageschnittstelle umfassen kann. Die Montagesockel können beispielsweise durch eine wie bereits weiter oben beschriebene Plattform, umfassend z.B. ein Schienensystem, bereitgestellt werden. Durch eine geeignete Schnittstellenkombination kann ein Austausch oder Ersatz eines Fertigungsmoduls in vergleichsweise kurzer Zeit und mit vergleichsweise geringem Aufwand durchgeführt werden.

In Ausgestaltungen können der Montagesockel und die Montageschnittstelle zueinander korrespondierenden Kopplungs- und/oder Kupplungselemente umfassen durch welche ein jeweiliges Fertigungsmodul (zerstörungsfrei) austauschbar in die Fertigungs- oder Bearbeitungslinie integriert werden kann. Beispielsweise kann ein Führungssystem, insbesondere ein Schienen-Rollensystem vorgesehen sein, welches eine Verschiebung einzelner Fertigungsmodule ermöglicht. Ferner können zur Fixierung der Fertigungsmodule an jeweiligen Fertigungsmodulstellplätzen und/oder an den Fertigungsmodulen entsprechende (Schnell-)Montageelemente oder -schnittstellen vorhanden sein. Insoweit kann ein Fertigungsmodul integriert werden, indem dieses, insbesondere als Ganzes, d.h. als eine einzige Funktionseinheit, über die Plattform, bzw. das Führungssystem/Schienen-Rollensystem an den jeweiligen Fertigungsmodulstellplatz bewegt, und anschließend über die Montageelemente fixiert wird. Umgekehrt kann ein Fertigungsmodul entnommen werden, indem die Montageelemente gelöst, und das Pressenmodul, insbesondere als Ganzes, d.h. als eine einzige Funktionseinheit, über das Führungssystem/Schienen-Rollensystem entnommen wird.

Wie bereits erwähnt, kann eine Plattform der Fertigungslinie erste Führungselemente, z.B. Schienen, aufweisen, und die Fertigungsmodule können korrespondierende zweite Führungselemente, z.B. Rollen, aufweisen. Andere Führungselemente und Führungseinheiten, insbesondere Gleitführungen, Rollenführungen usw., sind denkbar.

Ein zu einem Fertigungsmodulstellplatz korrespondierender Montagesockel kann beispielsweise als schachtartiger Einschub ausgebildet sein, oder einen derartigen Einschub umfassen, wobei der Einschub derart ausgebildet sein kann, dass ein Fertigungsmodul in einer Richtung senkrecht, insbesondere lateral, zur Bearbeitungslinie aus der Fertigungslinie entnommen werden kann. Ein entsprechendes Führungssystem kann beispielsweise quer bzw. lateral, insbesondere senkrecht, zur Fertigungslinie oder Bearbeitungslinie verlaufende Führungen, z.B. Schienen, umfassen.

In Ausgestaltungen kann der Einschub ein (Zwangs-)Führungssystem, insbesondre Linearführungssystem, vorzugsweise ein Schienensystem, umfassen, mit welchem jeweils eines der Fertigungsmodule, insbesondere Pressenmodule, koppelbar und senkrecht zur Fertigungslinie insbesondere Bearbeitungslinie, verschiebbar ist. Das Führungssystem kann derart eingerichtet sein, dass ein jeweiliges Fertigungsmodul senkrecht zur Fertigungslinie entnehmbar, einsetzbar und/der austauschbar ist.

Ferner kann das Führungssystem so eingerichtet sein, dass ein jeweiliges Fertigungsmodul derart positionierbar ist, dass dessen Fertigungsraum fluchtend zum Fertigungskanal liegt, oder dass dessen Fertigungsraum außerhalb der Fertigungslinie gelegen ist.

Mit entsprechenden Führungssystemen kann der zum Austausch eines Fertigungsmoduls benötigte Aufwand deutlich reduziert werden. Ferner können einzelne Fertigungsmodule aus dem Fertigungsverbund z.B. seitlich oder lateral herausgezogen werden, wodurch die Zugänglichkeit zu den Komponenten des jeweiligen Fertigungsmoduls bei Bedarf, z.B. bei kurzen Wartungs- oder Reinigungsarbeiten, verbessert werden kann.

In Ausgestaltungen kann der Fertigungsmodulstellplatz des oder der Fertigungsmodule auf einem Untergrund fest vorgegeben sein, oder der Fertigungsmodulstellplatz kann auf einem Untergrund in der Lage in einer oder zwei Dimensionen, insbesondere längs und/oder quer zur Fertigungslinie veränderbar, ausgebildet sein.

In Ausgestaltungen kann die Fertigungslinie bzw. das Fertigungssystem des Weiteren eine mit einer über eine kabelgebundene oder kabellose Datenkommunikation, insbesondere einen Steuerbus, mit einer Fertigungsliniensteuerung gekoppelte Steuerschnittstelle umfassen. Die Steuerschnittstelle kann eingerichtet sein zur signaltechnischen und steuerungstechnischen, insbesondere kabelgebundenen oder kabellosen, Kopplung mit einer Komplementärschnittstelle eines austauschbaren Fertigungsmoduls, und ferner zur, insbesondere uni- oder bidirektionalen, Übermittlung von Steuerbefehlen und/oder Betriebsparametern des Fertigungsmoduls.

In Ausgestaltungen kann zumindest eines der austauschbaren Fertigungsmodule eine Fertigungsmodulsteuerung umfassen, durch welche der Betrieb der Komponenten des Fertigungsmoduls zumindest teilweise, vorzugsweise vollständig, steuerbar ist. Mit einer entsprechenden Steuerung kann ein jeweiliges Fertigungsmodul flexibel eingesetzt werden, und im Verbund innerhalb einer Fertigungslinie, alleine als einzelnes Fertigungsmodul, oder in verschiedenen Fertigungslinien betrieben und verwendet werden.

In Ausgestaltungen kann die Fertigungslinie des Weiteren eine Überwachungseinheit zum Empfang, zur Erfassung und zur Verarbeitung von Betriebsparametern, insbesondere Fertigungs- und Prozessparametern, der einzelnen, insbesondere austauschbaren Fertigungsmodule umfassen. Insbesondere kann so der Betrieb der Fertigungsmodule, insbesondere einzelner Fertigungsschritte, überwacht und bei Bedarf dokumentiert werden.

Ein synchroner, insbesondere synchron getakteter, Betrieb der Fertigungsmodule in einer Fertigungslinie kann beispielsweise durch eine übergeordnete Mastersteuerung, die steuerungstechnisch mit den an den jeweiligen Fertigungsmodulstellplätzen befindlichen Fertigungsmodulen, insbesondere deren Steuerungen, verbunden ist, gesteuert werden.

In Ausgestaltungen kann die Fertigungslinie des Weiteren zumindest eine in die Fertigungslinie, insbesondere modular, integrierbare Puffereinheit (insbesondere: Werkstückpuffereinheit) umfassen. Die Puffereinheit kann ausgebildet sein zur Aufnahme und zum Zwischenspeichern (oder: Zwischenpuffern) von Werkstücken, insbesondere teilbearbeiteten Werkstücken.

Die Puffereinheit kann in Ausgestaltungen mit einer Handhabungs- oder Transfereinheit eines stromaufwärts gelegenen Fertigungsmoduls zur Zufuhr von Werkstücken, und mit einer weiteren Handhabungs- oder Transfereinheit eines stromabwärts gelegenen Fertigungsmoduls zur Entnahme von zwischengepufferten Werkstücken koppelbar oder gekoppelt sein.

Die Puffereinheit kann beispielsweise derart eingerichtet sein, dass darin Werkstücke zwischengespeichert werden können, um beispielswiese den Wechsel bzw. die Neubestückung der Fertigungslinie mit Ausgangsmaterial, wie einem Blech-Bund (Coil) bei einer Pressenlinie und/oder den Austausch eines Fertigungsmoduls überbrücken zu können.

In Ausgestaltungen kann ein hierin weiter oben oder nachfolgend beschriebenes Fertigungsmodul, insbesondere Umformmodul oder Pressenmodul, dazu eingerichtet sein, austauschbar, insbesondere modular austauschbar, in eine hierin beschriebene Fertigungslinie mit mehreren modular bestückbaren Fertigungsmodulstellplätzen integriert zu werden, wobei der Begriff austauschbar insbesondere einen (zerstörungsfreien) kurzfristigen Wechsel und/oder Tausch eines der Fertigungsmodule umfassen soll, ohne dabei den Betrieb der Fertigungslinie langfristig zu beeinträchtigen.

In Ausgestaltungen ist ein Verfahren zum Einrichten einer modular mit Fertigungsmodulen, insbesondere Umformmodulen oder Pressenmodulen, bestückbaren Fertigungslinie, z.B. Umformlinie oder Pressenlinie, vorgesehen wobei die Fertigungslinie entsprechend einer hierin beschriebenen Ausgestaltung eingerichtet sein kann, und wobei die Fertigungslinie mit zumindest einem, als Ganzes (modular) austauschbaren Fertigungsmodul, insbesondere ausgebildet nach einem der hierin beschriebenen Ausgestaltungen, bestückt oder bestückbar ist. Vorzugsweise wird ein Fertigungsmodul an einer mit einem entsprechenden Fertigungsmodul variabel bzw. modular bestückbare Fertigungs- oder Bearbeitungsposition bzw. an einem entsprechenden Fertigungsmodulstellplatz eingerichtet oder integriert.

Das vorgeschlagene Verfahren kann insbesondere die folgenden Schritte umfassen:
an der zumindest einen modular bestückbaren Fertigungsposition bzw. dem modular bestückbaren Fertigungsmodulstellplatz wird ein austauschbares Fertigungsmodul über mechanische Kopplungselemente zum austauschbaren Wechsel eines Fertigungsmoduls mechanisch installiert; und
- das installierte Fertigungsmodul wird steuerungstechnisch mit einer Master-Steuerung der Fertigungslinie verbunden und in den Betriebsablauf längs der Fertigungslinie integriert.

In Ausgestaltungen des Verfahrens können, vorzugsweise nach steuerungstechnischem Anschluss des austauschbaren Fertigungsmoduls, insbesondere Pressenmoduls, Steuerparameter zur Steuerung des austauschbaren Fertigungsmoduls auf das austauschbar integrierte Fertigungsmodul übertragen werden. Die Steuerparameter, z.B. Press- und Prozessparameter, können beispielsweise von einer über eine Datenkommunikation mit dem Fertigungsmodul verbundene, und zur Steuerung aller Fertigungsmodule ausgebildeten Mastersteuerung der Fertigungslinie übertragen werden.

In Ausgestaltungen des Verfahrens können, vorzugsweise nach steuerungstechnischem Anschluss eines oder mehrerer, insbesondere aller, modular austauschbarer Fertigungsmodule, Steuerparameter zur Ansteuerung des modular austauschbaren Fertigungsmoduls und/oder zur Ansteuerung der Gesamtheit der Fertigungsmodule und Bearbeitungseinheiten der Fertigungslinie, auf eine bzw. die Mastersteuerung der Fertigungslinie übertragen werden.

In Ausgestaltungen des Verfahren können nach Installation des oder der modular austauschbaren Fertigungsmodule Steuerparameter zum Betrieb des Fertigungsmoduls und/oder Steuerparameter zum Betrieb der Fertigungslinie von einem in ein Kommunikationsnetzwerk am Ort der Fertigungslinie integrierten Speicher, oder von einem vom Ort der Fertigungslinie örtlich entfernten (oder: getrennten) Speicher (insbesondere Cloud-Speicher) oder Rechner über ein weiteres Kommunikationsnetzwerk zum Kommunikationsnetzwerk der Fertigungslinie, beispielsweise ein Steuer- oder Daten-Bus, zum Zwecke der Steuerung der (modular aufgebauten) Fertigungslinie übertragen werden.

In Ausgestaltungen ist ein Verfahren zur Erstellung von Betriebsparametern für eine, insbesondere nach einer hierin beschriebenen Ausgestaltung ausgebildeten, Fertigungslinie, mit z.B. mehreren modulartig austauschbar bestückbaren Fertigungsmodulstellplätzen, vorgesehen. Bei dem vorgeschlagenen Verfahren wird an einem (insbesondere einzelnen) gemäß einer der hierin beschriebenen Ausgestaltungen für ein Fertigungsmodul ausgebildeten Erprobungsfertigungsmodul (insbesondere: Try-Out-Fertigungsmodul), oder an einer gemäß einer der hierin beschriebenen Ausgestaltungen für eine Fertigungslinie ausgebildeten Erprobungs-Fertigungslinie (insbesondere: Try-Out-Fertigungslinie) ein Betriebs- und/oder Steuerparameterdatensatz korrespondierend zu einer vorgegebenen Betriebsweise, und optional vorgegebenen Anzahl und Art von Fertigungs- oder Bearbeitungsstationen, und Werkzeugen, im Probelauf erstellt.

Der erstellte Betriebs- und/oder Steuerparameterdatensatz wird zur Konfiguration, d.h. zum Zwecke der steuertechnisch betriebsbereiten Einrichtung, des/der zum Erprobungsfertigungsmodul/zur Erprobungsfertigungslinie im Wesentlichen identisch, vorzugsweise vollständig identisch, aufgebauten Fertigungsmoduls/Fertigungslinie unmittelbar an das Fertigungsmodul/die Fertigungslinie über einen Datenkommunikationsweg übertragen, oder in einem zur Übertragung an das Fertigungsmodul/die Fertigungslinie vorgesehenen Zwischenspeicher gespeichert.

In Ausgestaltungen kann der Betriebs- und/oder Steuerparameterdatensatz vom Zwischenspeicher zum Zwecke der betriebsbereiten Einrichtung an das Fertigungsmodul bzw. die Fertigungslinie übertragen werden.

Vorzugsweise sind alle Fertigungsmodule, oder zumindest eine Gruppe von Fertigungsmodulen, einer Bearbeitungseinheit oder einer Fertigungslinie gleich aufgebaut. Das hat den Vorteil, dass ein einzelnes Fertigungsmodul, oder einige wenige Fertigungsmodule, als Try-Out Modul ausreicht/en, um die jeweils identisch aufgebauten Fertigungsmodule der Fertigungslinie einrichten zu können, beispielsweise im Zusammenhang mit dem Einrichten und Einfahren von Fertigungs- oder Bearbeitungswerkzeugen.

In Ausgestaltungen kann ein Verfahren zum betriebsbereiten Einrichten einer zur Werkstückherstellung ausgebildeten Fertigungslinie, mit z.B. mehreren modulartig austauschbar bestückbaren Fertigungsmodulstellplätzen, vorgesehen sein, wobei die Fertigungslinie entsprechend einer der hierin vorgeschlagenen Ausgestaltungen ausgebildet sein kann. Das Verfahren kann auch oder alternativ dazu vorgesehen sein, zumindest ein in eine Fertigungslinie, mit z.B. mehreren modulartig austauschbar bestückbaren Fertigungsmodulstellplätzen, integriertes Fertigungsmodul, das entsprechend einer hierin beschriebenen Ausgestaltung ausgebildet ist, betriebsbereit einzurichten.

Das vorgeschlagene Verfahren umfasst den Schritt des Einlesens eines Betriebs- und/oder Steuerparameterdatensatzes von einem tragbaren Speichermedium, einem mit einem Datenkommunikationsnetzwerk verbundenen lokalen Datenspeicher oder Rechner, oder einem mit einem Datenkommunikationsnetzwerk verbundenen räumlich entfernten Datenspeicher oder Rechner, beispielsweise in einer Cloud-basierten Datenkommunikationsumgebung.

Insbesondere können mit dem vorgeschlagenen Verfahren an einer Try-Out Modul ermittelte Betriebs-, Steuer- und/oder Prozessparameter, bei entsprechend identisch aufgebauten Fertigungsmodulen einer Fertigungslinie eingelesen werden, so dass die Fertigungslinie bzw. ein oder mehrere Fertigungsmodule der Fertigungslinie betriebsbereit eingerichtet sind. Nach Einlesen der Betriebs- und/oder Steuerparameter kann die Fertigungslinie in Betrieb gesetzt werden, so dass der am Ort der Fertigungslinie erforderliche Zeitaufwand zum betriebsbereiten Einrichten der Fertigungslinie, z.B. zum Einrichten oder Einfahren von Werkzeugen, als Ganzes bzw. von einem oder mehreren Fertigungsmodulen einer jeweiligen Fertigungslinie, deutlich verringert werden kann.

In Ausgestaltungen kann das Verfahren einen Verfahrensschritt umfassen, in welchem zumindest ein Fertigungsmodul der Fertigungslinie, z.B. an einem jeweiligen Fertigungsmodulstellplatz, eingesetzt oder ausgetauscht wird, und in welchem Betriebs- und/oder Steuerparameter für das eingesetzte oder ausgetauschte Fertigungsmodul an der Fertigungslinie vom Speichermedium, dem lokalen oder entfernten Datenspeicher eingelesen werden. Die Betriebs- und/oder Steuerparameter(-datensätze) können in eine dem jeweiligen Fertigungsmodul lokal zugeordnete Steuereinheit und/oder in eine den Fertigungsmodulen zugeordnete Hauptsteuereinheit, insbesondere eine Master-Steuereinheit eingelesen werden. Dadurch ist es möglich, einzelne Fertigungsmodule, die jeweiligen Bearbeitungsstationen der modular mit Fertigungsmodulen bestückbaren Fertigungslinie zugeordnet sind, in einfacher Weise auszutauschen, und nach Austausch mit vergleichsweise geringem Zeitaufwand betriebsbereit einzurichten.

In Ausgestaltungen kann das Verfahren den weiteren Verfahrensschritt umfassen gemäß welchem zusätzlich zu den Betriebs- und/oder Steuerparametern zumindest ein, vorzugsweise sämtliche, zu den Betriebs- und/oder Steuerparametern gehörigen Werkzeuge in jeweilige Fertigungsmodule eingesetzt werden. Insbesondere ist auf diese Weise eine zeitoptimierte Umrüstung und Einrichtung einer Fertigungslinie möglich.

In Ausgestaltungen ist eine Fertigungsanlage, insbesondere ein Bearbeitungszentrum, vorgesehen, welche eine modular mit Fertigungsmodulen bestückbare Fertigungslinie umfasst, die ein oder mehrere Fertigungsmodulstellplätze aufweist, und nach einem der hierin beschriebenen Ausgestaltungen ausgebildet ist. Ferner ist gemäß Ausgestaltungen eine Fertigungsanlage vorgesehen, welche zumindest ein Fertigungsmodul nach einem hierin beschriebenen Ausgestaltungen umfasst.

Die hierin beschriebene Erfindung betrifft insbesondere ein Fertigungsmodul, und eine Fertigungslinie bzw. Fertigungsstraße, bei welcher ein oder mehrere der Fertigungsmodule an, insbesondere fest vorgegebenen, modular bestückbaren Installationsplätzen, insbesondere Fertigungsmodulstellplätzen, angeordnet sind, derart, dass ein bzw. die Fertigungsmodule flexibel und in einfacher Weise aus dem Verbund herausgenommen und durch ein im Wesentlichen identisches weiteres Fertigungsmodul ausgetauscht werden kann/können.

Die modular austauschbaren Fertigungsmodule können derart ausgebildet sein, dass diese im Wesentlichen an jeder beliebigen Bearbeitungsposition bzw. an jedem Fertigungsmodulstellplatz der Fertigungslinie, mit dem jeweiligen Bearbeitungswerkzeugen bestückt, verwendbar sind.

Ein oder mehrere der Fertigungsmodule in einer Fertigungslinie können insbesondere derart ausgebildet sein, dass diese in modulartig austauschbarerer Weise lösbar im Verbund integriert sind.

Eine wie hierin vorgeschlagene Fertigungslinie kann daher zwei oder mehrere Fertigungs- oder Bearbeitungspositionen umfassen an welche z.B. über korrespondierende Wechsel-Schnittstellen, insbesondere Schnellwechsel-Schnittstellen, Fertigungsmodule in lösbar austauschbarer Weise angeordnet werden können. Bei Defekt oder zur Wartung eines der Fertigungsmodule kann das jeweilige Fertigungsmodul als Ganzes aus den Verbund entnommen, und durch ein anderes Fertigungsmodul, z.B. mit gleicher oder identischer Konfiguration, ersetzt werden. Auch ist es möglich, einzelne Fertigungsmodule zu entnehmen, und durch andere Fertigungs- oder Bearbeitungseinheiten zu ersetzen.

Eine Steuerung eines jeweiligen Fertigungsmoduls kann so eingerichtet sein, dass diese eine direkte Steuerung des Fertigungsmoduls ermöglicht, d.h. dass das Fertigungsmodul als Einzelpresse betreibbar ist. Im Fertigungsverbund, d.h. bei Integration des Fertigungsmoduls in eine Fertigungslinie mit modular bestückbaren Fertigungsmodulstellplätzen, kann eine übergeordnete Steuerung die Steuerungshoheit für die Fertigungsmodule im Fertigungsverbund übernehmen, und dabei beispielsweise den Betrieb der Fertigungsmodule und der zugehörigen Handhabungseinheiten synchronisieren. Die Steuerungen der einzelnen Fertigungsmodule können beim Betrieb im Fertigungsverbund zur übergeordneten Steuerung der Fertigungslinie in einem sog. Master-Slave Verhältnis stehen, bei dem Hauptsteuerungsaufgaben und synchronisierter Betrieb durch eine Master-Steuerung vorgegeben werden, und weitere Steuerungsaufgaben lokal am jeweiligen Fertigungsmodul zumindest teilweise durch eine Slave-Steuerung umgesetzt werden.

Das vorgeschlagene Fertigungsmodul kann ferner, wie bereits beschrieben, ein Werkzeugwechselsystem umfassen. Das Werkzeugwechselsystem kann derart ausgebildet sein, dass ein Werkzeugwechsel von einer oder von zwei (z.B. lateralen) Seiten des Fertigungsmoduls aus möglich ist.

Bei einem einseitigen Werkzeugwechsel, d.h. unter Verwendung lediglich einer lateralen Seite, können das oder die bzw. ein oder mehrere Werkzeuge des Fertigungsmoduls, z.B. Ober- und/oder Unterwerkzeuge, beispielsweise gemeinsam aus dem Einbauraum bzw. Arbeitsraum des Fertigungsmoduls, z.B. eines Pressenmoduls, entnommen werden, und anschließend kann ein neues Werkzeug-Paket, bestehend z.B. aus Ober-und Unterwerkzeug, in den Einbauraum oder Fertigungs- bzw. Arbeitsraum gebracht werden. Hierzu können beispielsweise am Fertigungsmodul vorhandene Werkzeugwechselkonsolen verwendet werden. Das neue Werkzeugpaket kann nach Einsetzen manuell oder automatisch fixiert werden.

Bei einem zweiseitigen Werkzeugwechsel, d.h. bei Verwendung beider lateralen Seiten, können das oder die Werkzeuge, z.B. ein Ober-und Unterwerkzeug gemeinsam in einer vorgegebenen Richtung zu einer Seite des Pressenmoduls hin, z.B. in Richtung der Rückseite oder Vorderseite des Pressenmoduls, entfernt werden, und gleichzeitig oder nacheinander kann das neue Werkzeug-Paket von der gegenüberliegenden Seite (Vorderseite bzw. Rückseite) her in den Einbauraum eingebracht, und z.B. manuell oder automatisch fixiert werden.

Bei Verwendung des hierin vorgeschlagenen Pressenmoduls im Pressenverbund können mehrere der modulartig an entsprechenden Pressenmodulstellplätzen installierten Pressenmodule betrieben werden, und durch eine übergeordnete Mastersteuerung, die die Prozesshoheit übernimmt, gesteuert werden, wobei die Mastersteuerung dazu eingerichtet sein kann, die Pressenmodule und Werkstückbewegungen (oder: Werkstücktransfers) im Pressenverbund zu synchronisieren.

Im Fertigungsverbund, insbesondere innerhalb einer Fertigungslinie, kann bzw. können entsprechend einer Ausgestaltung der hierin vorgeschlagenen Erfindung zumindest ein Fertigungsmodul, oder mehrere, vorzugsweise alle, Fertigungsmodule, z.B. mittels eines Schienensystems, verschiebbar angeordnet sein, so dass ein jeweiliges Fertigungsmodul über das Schienensystem von einem Fertigungsmodulstellplatz aus dem Fertigungsverbund entnommen, und, ebenfalls über das Schienensystem, z.B. durch ein Ersatzfertigungsmodul ausgetauscht werden kann. Insbesondere ist es damit möglich, im Störungsfall ein einzelnes oder mehrere der modulartig integrierten Fertigungsmodule aus dem Fertigungsverbund zu nehmen und eine oder mehrere Ersatzfertigungsmodule einzusetzen.

Ferner ist es möglich, ein oder mehrere Fertigungsmodule aus dem Fertigungsverbund zu entnehmen, um beispielsweise Platz im Fertigungsverbund zu schaffen, wenn, beispielsweise an Stelle eines an einem Fertigungsmodulstellplatz modulartig integrierten Fertigungsmoduls, andere Fertigungseinheiten eingefügt werden sollen, wie z.B. Schweißstation, Bearbeitungssysteme, Biegestationen, Umformstation, 3D-Druckstation, etc..

Davon abgesehen können durch die freie Positionierbarkeit bzw. Einsetzbarkeit einzelner Fertigungsmodule an entsprechenden Fertigungsmodulstellplätzen in einfacher Weise unterschiedliche Bearbeitungsfolgen und Herstellungsprozesse umgesetzt werden, wobei insbesondere die Reihenfolge, Anzahl und/oder der Abstand der Fertigungsmodule je nach Anforderung flexibel eingestellt werden kann.

Ein hierin vorgeschlagenes Fertigungsmodul kann ferner dazu eingerichtet sein, Prozesswerte zu erfassen und an eine entsprechende Datenverarbeitungseinheit zu übermitteln. Damit können an jeweiligen Prozessstufen, vorzugsweise an allen Prozessstufen eines Fertigungsverbunds Prozesswerte, insbesondere separat, erfasst und gespeichert werden. Die Prozesswerte können lokal oder global zur weiteren Auswertung und Produktionsdatenverfolgung verwendet werden.

Die hierin vorgeschlagene Fertigungslinie und das hierin vorgeschlagene Fertigungsmodul ermöglichen auf Grundlage der modular bestückbaren Fertigungsmodulstellplätze eine variable Anlagenkonfiguration, die insbesondere skalierbar auf sich ändernde Anforderungen in der Werkstückherstellung, insbesondere Blechumformung, ist. Bearbeitungsprozesse, wie Schneiden, Stanzen, Biegen oder Tiefziehen usw. können durch einzelne, jeweils gesonderte, und bei Bedarf einsetzbare Fertigungsmodule bzw. Bearbeitungsmodule umgesetzt bzw. dargestellt werden, so dass eine vorgegebene Bearbeitungsabfolge durch entsprechende Zusammensetzung Wahl der Bearbeitungsmodule in einfacher Weise umgesetzt werden kann.

Mögliche weitere Vorteile der hierin beschriebenen Erfindung liegen insbesondere darin, dass
- eine Fertigungslinie mit modular austauschbar bestückbaren Fertigungsstellplätzen umgesetzt werden kann;
- bei einer Fertigungslinie ein modularer Aufbau, der skalier- und im Wesentlichen frei konfigurierbar ist, umgesetzt werden kann;
- jedes Fertigungsmodul über eigene Steuerung und einen eigenen Antrieb verfügen kann, wodurch eine individuelle Steuerung des jeweiligen Bearbeitungsschritts möglich ist;
- vergleichsweise niedrige Bauhöhen erreicht werden können;
- eine Fertigungslinie auch ohne ein spezielles Fundament eingerichtet werden kann;
- beispielsweise ein Umformverbund, insbesondere Pressenverbund, mit Umformmodulen bzw. Pressenmodulen umsetzbar ist, in dem Hubzahlen > 50/min möglich sind, wobei eine Umformlinie Umformmodule mit einer "Presskraft" von bis zu 50 t oder bis zu 100 t umfassen können;
- die Fertigungsmodule im Fertigungsverbund variabel vernetzbar sind, z.B. mittels Master-Slave-Steuerungen;
- eine Entnahme von Stadiengängen im laufenden Betrieb möglich ist;
- ein Werkzeugwechsel in einfacher Weise durchgeführt werden kann;
- neue Arbeitsschritte separat eingefahren werden können, beispielsweise bereits im Werkzeugbau mittels sog. Try-Out-Modulen;
- ein, insbesondere durchgehender, Fertigungskanal ausgebildet werden kann, in dem die Werkstücke, beispielsweise getaktet, bewegt werden können;
- eine einfache Wartung und Instandhaltung möglich ist, indem defekte Fertigungsmodule und Baugruppen in einfacher Weise ausgetauscht werden können, wodurch Lagerhaltung von Ersatzteilen vereinfacht und Stillstandszeiten durch Defekt und/oder Wartung reduziert werden können.

Zum Werkzeugwechsel können beispielsweise hydraulische Kugelrollenleisten am Pressenrahmen angebracht sein, wobei die Tragkraft der Kugelrollenleiste entsprechend dem jeweiligen Werkzeuggewicht gewählt ist.

In Ausgestaltungen kann ein Fertigungsmodul dazu ausgebildet sein, in drei Betriebsarten betrieben zu werden: Einrichten, Einzelbetrieb, Automatik. In der Betriebsart "Einrichten" können beispielsweise alle Bewegungen mit reduzierter Geschwindigkeit durch Betätigung der Zweihand-Bedienung an einem Bedienpanel ausgeführt werden. Ein jeweiliger Befehl kann hier als Dauerbefehl gegeben werden, d. h. lässt der Bediener ein entsprechendes Befehlsgerät los, so wird eine dazugehörige Bewegung gestoppt.

In der Betriebsart "Einzelbetrieb" können einzelne Fertigungsschritte, beispielsweise Pressenhübe bei einem Pressenmodul, ausgelöst werden.

In der Betriebsart "Automatik" arbeiten sämtliche Fertigungsmodule im Fertigungsverbund und werden über die übergeordnete Steuerung synchronisiert.

Eine erfindungsgemäß eingerichtete Fertigungslinie kann in folgenden Betriebsarten betrieben werden: Einrichten, Einzelbetrieb; Dauerlauf; Dauerlauf mit Transfer; Werkzeugwechsel.

In der Betriebsart " Einrichten" können alle Fertigungs-Bewegungen mit reduzierter Geschwindigkeit durch Betätigung entsprechender Befehlsgeräte ausgeführt werden. Ein jeweiliger Befehl kann als Dauerbefehl gegeben werden, d. h. wird man das entsprechende Befehlsgerät losgelassen, so wird die dazugehörige Bewegung gestoppt.

In der Betriebsart "Einzelbetrieb" kann ein kompletter Fertigungszyklus, beispielsweise Pressenzyklus, mit normaler Geschwindigkeit ausgeführt werden

In der Betriebsart "Dauerlauf " kann ein Fertigungsmodul vollautomatisch betrieben werden. Vor Starten des automatischen Ablaufs kann das Fertigungsmodul in eine Grundstellung gebracht werden.

In der Betriebsart "Dauerlauf mit Transfer " kann die gesamte Fertigungslinie vollautomatisch betrieben werden. Vor Starten des automatischen Ablaufs kann die Anlage in die Grundstellung gebracht werden. Der automatische Betrieb kann jederzeit wieder gestoppt werden, wobei während des Stoppzustands z.B. Einrichtbewegungen oder -operationen, beispielsweise im Handbetrieb, möglich sind, so dass z.B. kleinere Störungen, betreffend beispielsweise den Materialfluss, beseitigt werden können. Anschließend kann der automatische Ablauf wieder gestartet werden, wobei die Anlage derart eingerichtet sein kann, dass für das anschließende Anfahren die Grundstellung nicht erneut angefahren zu werden braucht.

Ausführungsbeispiele der vorliegenden Erfindung werden anhand der nachfolgenden Figuren insbesondere anhand eines Umform- bzw. Pressenmoduls und einer Umform- bzw. Pressenlinie näher beschrieben. Es zeigen:
- FIG. 1: eine perspektivische Ansicht eines Pressenmoduls ohne eingesetzte Presswerkzeuge;
- FIG. 2: das Pressenmodul nach FIG. 1 mit eingesetzten Presswerkzeugen;
- FIG. 3: das Pressmodul der FIG. 1 in einer Ansicht von oben;
- FIG. 4: das Pressenmodul der FIG. 1 in einer Seitenansicht;
- FIG. 5: das Pressenmodul der FIG. 2 in einer Seitenansicht;
- FIG. 6: das Pressenmodul der FIG. 1 in einer Frontansicht;
- FIG. 7: das Pressenmodul der FIG. 2 in einer Frontansicht;
- FIG. 8: eine Handhabungseinheit des Pressenmoduls;
- FIG. 9: eine Pressenlinie mit mehreren Pressenmodulen; und
- FIG. 10: ein Fertigungssystem mit Fertigungsmodulen, das in einer Konfiguration mit abgewinkelter Fertigungslinie und zwischengeschalteter Puffereinheit ausgebildet ist.

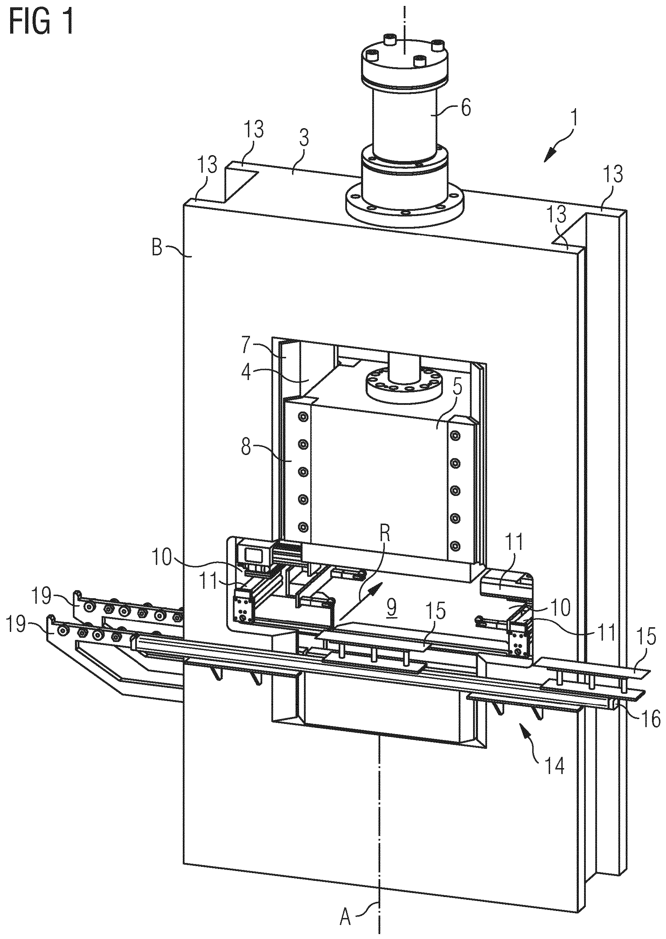

FIG. 1 zeigt als Beispiel für ein Fertigungsmodul ein Umform- bzw. Pressenmodul 1 zur Bearbeitung, insbesondere zur Umformung, von Werkstücken, vorzugsweise zumindest teilweise aus Metall, insbesondere Blech. Das Werkstück kann aus einem oder mehreren unterschiedlichen Materialen hergestellt werden, und beispielsweise Komponenten aus verschiedenen Metallen und/oder Plastik umfassen.

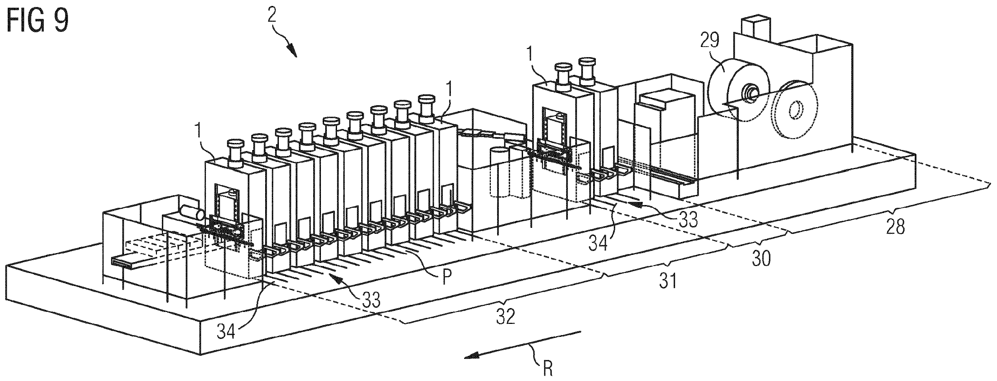

Das Pressenmodul 1 ist eingerichtet und ausgebildet zur modularen Integration in eine wie in FIG. 9 gezeigte Pressenlinie 2 mit mehreren aufeinanderfolgenden Arbeitspositionen und den Arbeitspositionen zugeordneten, modular austauschbar mit Pressenmodulen bestückbaren Pressenmodulstellplätzen.

Das Pressenmodul 1 der FIG. 1 umfasst einen umfangsseitig geschlossenen, Pressenrahmen 3, einen an einer Innenflanke 4 des Pressenrahmens 3 bewegbar montierten und gleitbar gelagerten Pressenstößel 5 zur Werkstückbearbeitung.

Der Pressenstößel 5 ist antriebstechnisch mit einem Antrieb, im vorliegenden Fall einem Hydraulikzylinder 6 als Linearmotor gekoppelt, und kann durch entsprechenden Betrieb des Hydraulikzylinders 6 mittels einer (nicht explizit gezeigten Steuereinheit) auf- und abbewegt werden.

Der Antrieb, i.e. der Hydraulikzylinder 6, ist an einer Oberseite des Pressenrahmens befestigt.

Der Pressenstößel 5 ist über an abgeschrägten Kanten der Innenflanken 4 angebrachte Gleitelemente 7, und korrespondierende, mit dem Pressenstößel 5 mechanisch verbundene Führungselemente 8, die korrespondierend zu den Kanten abgeschrägt sind, am Pressenrahmen gleitbar gelagert und montiert. Durch die Lagerung des Pressenstößels über vier, jeweils paarweise gegenüberliegende abgeschrägte Gleitkanten, kann eine im Wesentlichen verkippungsfreie Lagerung erreicht werden.

Das Pressenmodul 1 weist an den Bewegungsraum des Pressenstößels 1 anschließend einen Arbeitsraum 9 auf, in welchem im Betrieb in zu bearbeitendes Werkstück platziert werden kann.

An den Arbeitsraum 9 anschließend und mit dem Arbeitsraum 9 kommunizierend ausgebildet sind am Pressenrahmen 3 zwei Ausnehmungen 10 ausgebildet. Die Ausnehmungen 10 erstrecken sich beiderseits des Arbeitsraums 9 lateral nach außen.

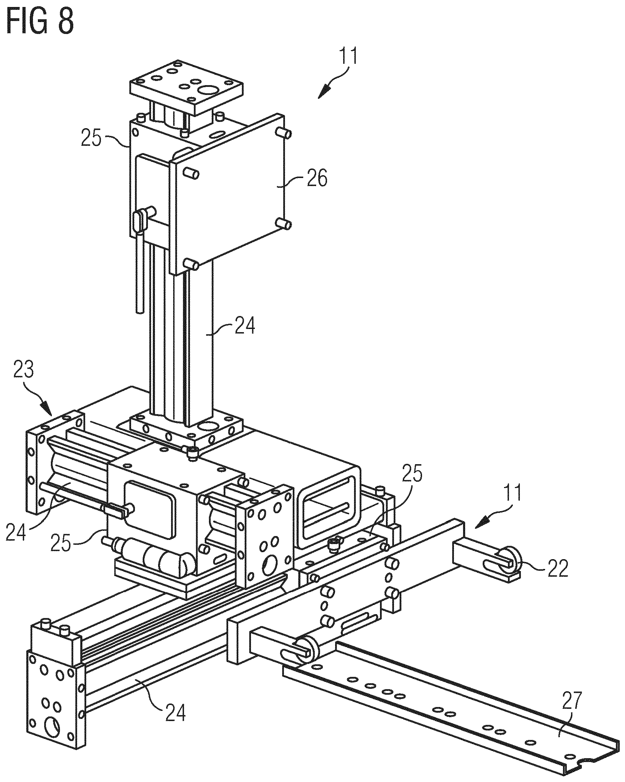

In jeder der Ausnehmungen 10 ist eine wie in FIG. 8 gezeigte erste Handhabungseinrichtung 11 zum Transport von Werkstücken in und aus dem Arbeitsraum 9 angeordnet bzw. montiert.

Gegenüberliegend zum Pressenstößel 5 ist am Pressenrahmen des Weiteren ein Pressentisch 12 vorhanden bzw. ausgebildet.

In der Ausgestaltung gemäß der Figuren sind die innerhalb des Pressenrahmens 3 ausgebildeten Räume zur Aufnahme des Pressenstößels 5, des Pressentisches 12 und der Arbeitsraum 9, und darüber hinaus die Ausnehmungen 10 als den Pressenrahmen 3 durchsetzende Durchbrüche ausgebildet, d.h. entsprechende Stellen des Pressenrahmens 3 sind als den Pressenrahmen 3 durchgreifende Durchsetzungen ausgebildet, wodurch z.B. die Zugänglichkeit zu den Komponenten des Pressenmoduls 1 verbessert, und das Gewicht eines Pressenmoduls 1 optimiert werden kann, was insbesondere vorteilhaft hinsichtlich der modularen Austauschbarkeit der Pressenmodule 1 ist.

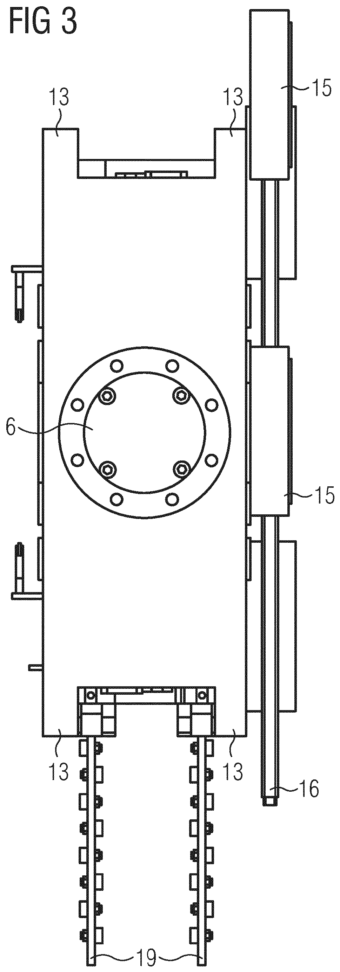

An den Schmalseiten kann der Pressenrahmen 3 jeweils zwei an den Pressenrahmenkanten vorspringende Flansche 13 bzw. Gurte aufweisen, so dass die Schmalseiten einen nach außen offenen U-förmigen Querschnitt aufweisen. Durch eine entsprechend Ausbildung der Schmalseiten kann insbesondere ein Kompromiss zwischen reduziertem Gewicht, ausreichender Verwindungssteifigkeit und Stabilität des Pressenrahmens erreicht werden. Die sich durch die Flansche 13 ergebenden im Querschnitt U-förmig ausgebildeten Schmalseiten sind aus der in FIG. 3 gezeigten Draufsicht gut zu erkennen.

Der Pressenrahmen 3 der vorliegenden Ausführung ist bezüglich der einer durch die Arbeitsachse A des Pressenstößels 5 verlaufenden Mittelebene symmetrisch ausgebildet, was im Hinblick auf die Zusammenstellung mehrerer Pressenmodule 1 in einer Pressenlinie 2 und hinsichtlich der hierin vorgeschlagenen Modularität und modularen Austauschbarkeit von Pressenmodulen 1 von Vorteil sein kann.

Das Pressenmodul 1 umfasst des Weiteren eine zweite Handhabungseinrichtung 14, welche an einer quer zur Beschickungsrichtung R gelegenen Breitseite B des Pressenrahmens 3 am Pressenrahmen 3 angebracht ist, insbesondere angeflanscht, sein kann, und in vorliegendem Beispiel dem Arbeitsraum 9 in Beschickungsrichtung R vorgeschaltet ist. In Frontansucht betrachtet ist die zweite Handhabungseinrichtung 14 zumindest teilweise unterhalb des Arbeitsraums angebracht. Die Befestigung der zweiten Handhabungseinrichtung 14 zumindest teilweise oberhalb des Arbeitsraums, insbesondere am Pressenrahmen, beispielsweise mit entsprechenden Greifern zum Greifen eines Werkstücks oder anderer Komponenten, ist ebenfalls möglich.

Die zweite Handhabungseinrichtung 14 umfasst zwei Manipulatoren, die im vorliegenden Fall als Ablageschlitten 15 ausgebildet sind. Die Ablageschlitten 15 sind im vorliegenden Ausführungsbeispiel mit einer parallel zur Breitseite B verlaufenden Linearführung 16, insbesondere einer Linearführungsschiene mit korrespondierenden Antrieben, insbesondere Linearantrieben, gekoppelt. Die Linearführung 16 und die Ablageschlitten 15 sind derart ausgebildet, dass die Ablageschlitten in synchroner Weise parallel zur Breitseite 15 verschiebbar sind, derart, dass einer der Ablageschlitten 15 am Arbeitsraum 9 positioniert ist, während der zweite Ablageschlitten an einer am lateral äußeren Ende der Linearführung 16 positioniert ist, beispielsweise zumindest teilweise außerhalb des Pressenrahmens 3.

Mit der zweiten Handhabungseinrichtung 14 kann beispielsweise im laufenden Betrieb des Pressenmoduls 1 ein Werkstück herausgefahren, z.B. ausgeschleust, werden, indem der am Arbeitsraum 9 befindliche Ablageschlitten 15, bzw. Verschiebeschlitten, mit einem darauf befindlichen Werkstück, nach außen bewegt wird. Gleichzeitig kann der außen befindliche Ablageschlitten 15 nach innen zum Arbeitsraum 9 bewegt werden, und kann dort zur Ablage bzw. Aufnahme eines Werkstücks verwendet werden.

Ferner kann mittels der zweiten Handhabungseinrichtung 14 ein zusätzliches Element, beispielsweise ein Konstruktionselement wie ein Gewindeelement und dergleichen, dem Arbeitsraum 9 zugeführt werden, um beispielsweise in einem Bearbeitungsschritt mit einem Werkstück verbunden oder in dieses integriert zu werden.

Die zweite Handhabungseinrichtung 14 kann auch dazu verwendet werden wie oben bereits beschrieben, zusätzliche Prozessschritte zu integrieren, wie z.B. Drehen des Werkstücks, Markieren des Werkstücks, Schweißen, Schneiden usw..

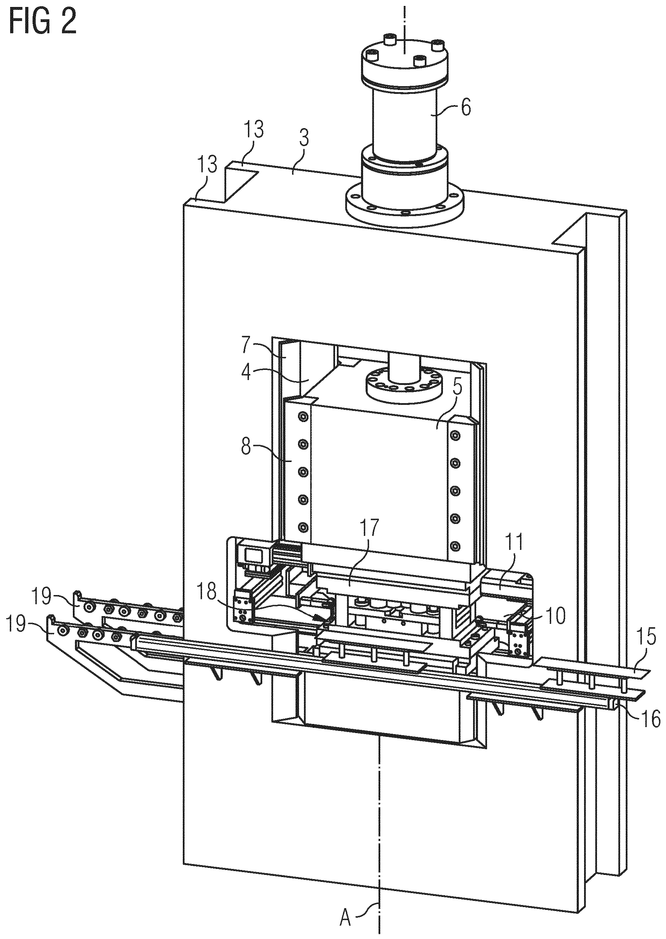

FIG. 2 zeigt das Pressenmodul 1 mit eingesetzten Werkzeugen, wobei mit dem Pressenstößel 5 ein Oberwerkzeug 17, und mit dem Pressentisch 12 ein Unterwerkzeug 18 gekoppelt sind.

Zum Wechsel der Werkzeuge 17, 18 umfasst das Pressenmodul 1 des Weiteren an einer Seite, insbesondere Schmalseite, des Pressenrahmens 3 befestigte Kugelrollenleisten 19, wobei die Kugelrollenleisten 19 dazu vorgesehen und ausgebildet sind, bei einem Werkzeugwechsel die Ober- und Unterwerkzeuge 17, 18 in den Arbeitsraum 9 und daraus heraus zu bewegen.

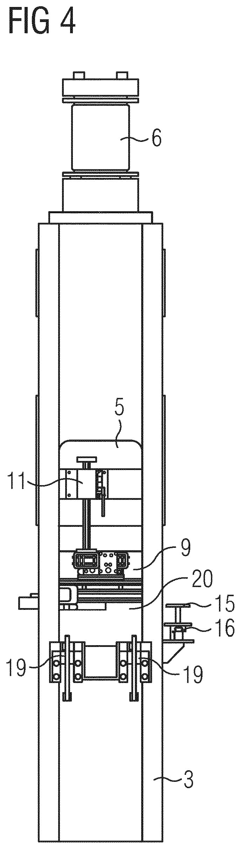

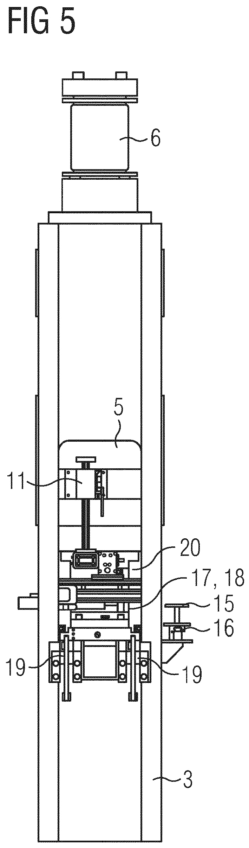

FIG. 4 und FIG. 5 zeigen Seitenansichten des Pressenmoduls 1, wobei aus diesen Seitenansichten ersichtlich ist, dass der Pressenrahmen 3 an jeder Lateralseite (eine der Lateralseiten ist in FIG. 4 und FIG. 5 in Draufsicht sichtbar) auf Höhe des Arbeitsraums 9 einen mit dem Arbeitsraum 9 kommunizierenden lateralen Durchbruch 20 aufweist. Die lateralen Durchbrüche 20 sind derart ausgebildet, dass diese zusammen mit dem Arbeitsraum 9 einen sich in lateraler Richtung, insbesondere senkrecht zur Werkstückflussrichtung R, erstreckenden Kanal ausbilden, der derart ausgebildet ist, dass ein im Arbeitsraum 9 befindliches Werkzeug in lateraler Richtung entnommen und eingesetzt werden kann. Im vorliegenden Beispiel weisen beide Durchbrüche 20 die gleiche Form und den gleichen Durchmesser auf, und sind bezüglich einer durch die Arbeitsachse A verlaufenden Mittelebene symmetrisch ausgebildet.

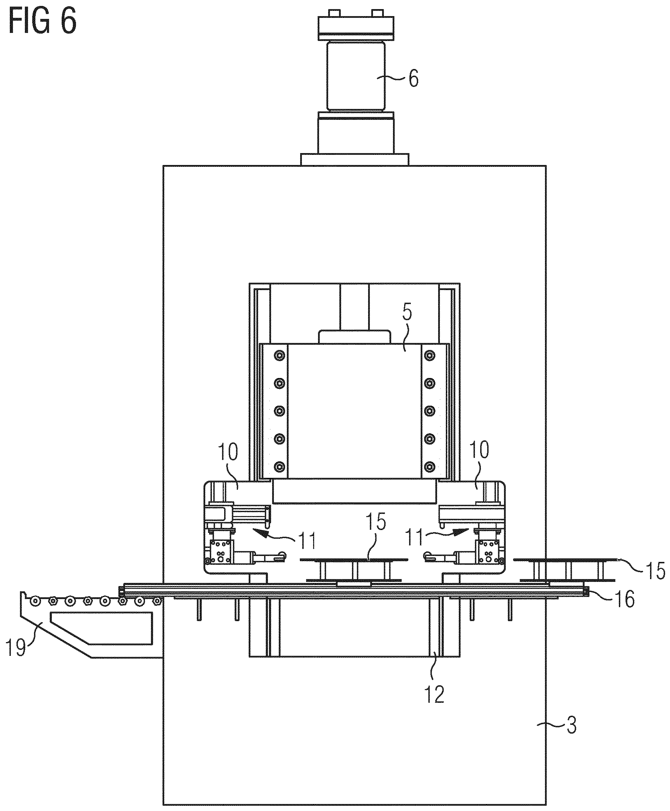

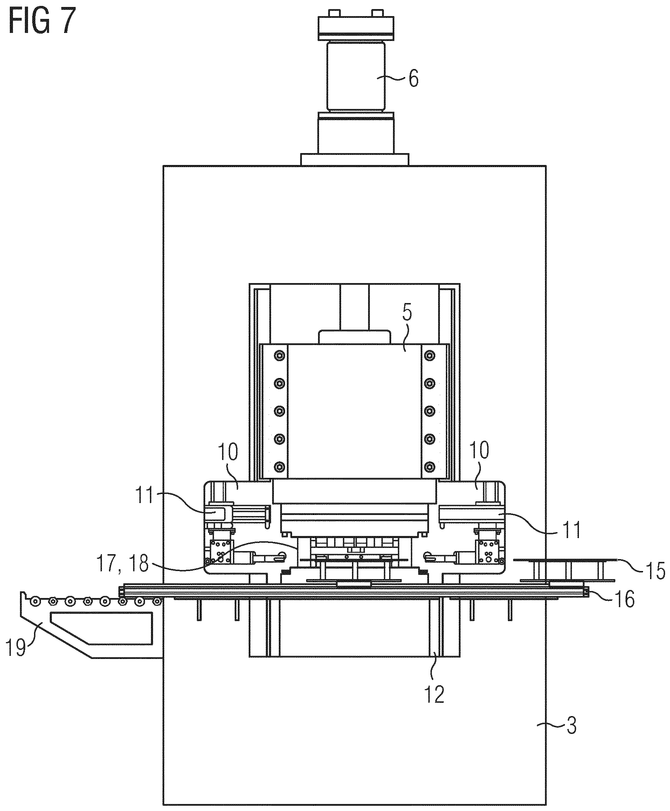

FIG. 6 und FIG. 7 zeigen das Pressenmodul 1 in Frontansicht, wobei daraus gut zu erkennen ist, dass die ersten Handhabungseinrichtungen 11, in den Ausnehmungen 10 angeordnet sein können. Durch die Ausnehmungen 10 kann einerseits erreicht werden, dass die Bewegungsfreiheit und das zur Verfügung stehende Bewegungsvolumen für die erste Handhabungseinrichtungen 11 erhöht ist, wodurch sich Vorteile für den Transport von Werkstücken in den Arbeitsraum 9 hinein und aus dem Arbeitsraum 9 heraus ergeben. Ferner kann ein vergleichsweise kompakter Aufbau umgesetzt werden.

Insbesondere bieten sich Vorteile für die Platzierung und Positionierung eines Werkstücks am Unterwerkzeug 18, sowie für die Entnahme eines Werkstücks aus dem Unterwerkzeug 18.

Ein Ausführungsbeispiel einer ersten Handhabungseinrichtung 11 ist in FIG. 8 näher gezeigt. Im konkreten Beispiel der FIG. 8 umfasst die erste Handhabungseinrichtung 11 einen Manipulator 21 mit einem oder mehreren zum Greifen eines Werkstücks 27 ausgebildeten Greiforganen 22. Der Manipulator ist mit einer Aktuatoreinheit 23 gekoppelt, welche im vorliegenden Beispiel eine Bewegung des Greiforgans 22 bzw. des Manipulators 21 in drei Bewegungsrichtungen ermöglicht.

Konkret umfasst die erste Handhabungseinrichtung 11 drei an jeweiligen Linearführungen 24 linearverschiebbar gelagerte Aktuatoren 25, welche längs der Linearführungen 24 bewegt werden können, um so den Manipulator 21 bzw. das Greiforgan 22 zu bewegen.

Die Linearführungen 24 sind in drei senkrecht zueinander stehenden Richtungen angeordnet, wobei im montierten Zustand eine erste Linearführung parallel zur Arbeitsachse A, eine zweite Linearführung parallel zur Werkstückflussrichtung R eingerichtet ist, und wobei eine dritte Linearführung senkrecht dazu ausgebildet ist, und eine Bewegungskomponente lateral auf den Arbeitsraum 9 hin und davon weg ermöglicht.

Einer der Aktuatoren 25 umfasst eine Montageplatte 26 zur freitragenden Befestigung am Pressenrahmen 3.

Wie aus FIG. 1 bis 7 ersichtlich ist, ist an jeder lateralen Seite des Arbeitsraums 9 eine erste Handhabungseinrichtung 11 montiert, wobei die ersten Handhabungseinrichtungen 11 z.B. derart synchron betreibbar sind, dass ein Werkstück 27 im Arbeitstakt des Pressenmoduls in Werkstückflussrichtung R bewegt, zur Bearbeitung im Arbeitsraum 9, insbesondere auf einem entsprechenden Unterwerkzeug 18, abgelegt werden kann, nach der Bearbeitung aus dem jeweiligen Werkzeug 18 entnommen, und z.B. auf einen Ablageschlitten 15 abgelegt werden kann.

FIG. 9 zeigt eine Fertigungslinie beispielhaft anhand einer Pressenlinie 2 mit mehreren modular austauschbar bestückbaren Pressenmodulstellplätzen P. Pressenmodulstellplätze P der Pressenlinie sind im Beispiel der FIG. 9 mit Pressenmodulen 1 bestückt, wobei die Pressenmodule 1 in Werkstückflussrichtung R sequentiell hintereinander angeordnet sind. Vorzugsweise sind die Pressenmodule 1 der Pressenlinie 2 identisch ausgebildet.

Im Ausführungsbeispiel der FIG. 9 umfasst die Pressenlinie 2 eine Zubringereinheit 28, mit der der den Pressenmodulen 1 ein Blechband als Ausgangsmaterial von einer entsprechenden Rolle, d.h. einem entsprechenden Blech-Coil 29, zugeführt werden kann.

Der Zubringereinheit 28 in Werkstückflussrichtung R nachgeschaltet ist im vorliegenden Beispiel eine erste Bearbeitungseinheit 30, umfassend zwei an Pressenmodulstellplätzen P modular entnehmbar installierte Pressenmodule 1. Die erste Bearbeitungseinheit 30 kann beispielsweise eingerichtet sein für Arbeitsgänge wie Schneiden und Lochen.

Der ersten Bearbeitungseinheit 30 in Werkstückflussrichtung R nachgeschaltet ist im Beispiel der FIG. 9 eine Puffereinheit 31, die dazu ausgebildet ist, Werkstücke 27 aufzunehmen und zwischenzuspeichern, d.h. zu puffern. Die Puffereinheit 31 kann beispielswiese in der Aufnahmekapazität derart ausgebildet sein, dass die für einen Wechsel einer Blech-Coil 29 erforderliche Zeit überbrückt werden kann, so dass die der Puffereinheit 31 nachgeschaltete zweite Bearbeitungseinheit 32 auch bei einem Wechsel einer Blech-Coil 29 weiter betrieben werden kann.

Die zweite Bearbeitungseinheit 32 umfasst beispielhaft insgesamt neun Pressenmodule 1, die dazu eingerichtet sind, die von der ersten Bearbeitungseinheit erzeugten Stadien, beispielsweise durch eine Reihe von Umformoperationen, zum Endprodukt weiterzuverarbeiten. Die weiteren Pressenmodule 1 der zweiten Bearbeitungseinheit 32 sind modular austauschbar an entsprechenden Pressenmodulstellplätzen P der Pressenlinie 2 installiert.

Der zweiten Bearbeitungseinheit 32 ist in Werkstücktransportrichtung R nachgeschaltet eine weitere operative Einheit zur Aufnahme und zum Abtransport des fertigen Werkstücks angeordnet.

Die Pressenmodule 1 können entsprechend eines im Zusammenhang mit den Figuren 1 bis 8 beschriebenen Pressenmoduls aufgebaut sein, wobei die Pressenmodule 1 der ersten Bearbeitungseinheit 30 (Schneiden, Lochen usw.) mit vergleichsweise kurzen Pressenhüben betrieben werden können, und wobei die Pressenmodule 1 der zweiten Bearbeitungseinheit (Umformung, Biegen usw.) mit längeren Pressenhüben betrieben werden können.

Wie bereits erwähnt, können sämtliche Pressenmodule 1 (abgesehen von den eingesetzten Werkzeugen) identisch ausgebildet sein. Dies ist insbesondere für Ersatzteilbereitstellung und Austausch von modular integrierten Pressenmodulen 1 von Vorteil. Insbesondere ist es nicht zwingend erforderlich für jedes der austauschbar integrierten Pressenmodule 1 jeweils ein Ersatzpressenmodul vorzuhalten.

Die Pressenmodule 1 der Pressenlinie 2 sind sequentiell zueinander angeordnet, so dass die Arbeitsräume 9 der Bearbeitungseinheiten entlang der jeweiligen Bearbeitungslinie einen Bearbeitungskanal zum Werkstücktransport bilden.

Die Pressenlinie 2 umfasst ein Schienensystem 33, mit mehreren, den Pressenmodulstellplätzen zugeordneten Schienen 34, die in FIG. 9 im Bereich der Bearbeitungseinheiten 30, 32 gezeigt sind. Die Pressenmodule 1 sind über korrespondierende mechanische Schnittstellen, die beispielsweise an der Unterseite des Pressenrahmens 3 ausgebildet sein können, etwa korrespondierende Rollen, mit dem Schienensystem 33 gekoppelt. Die Kopplung der Pressenmodule 1 mit dem Schienensystem 33 ist derart, dass jedes Pressenmodul 1 durch Verschiebung längs der jeweiligen Schiene 34 vom jeweiligen Pressenmodulstellplatz aus dem Pressenverbund entnommen werden kann. Gleichzeitig ist es möglich, ein, beispielsweise ersatzweise vorgehaltenes, und mit entsprechenden Werkzeugen bestücktes oder bestückbares bzw. zu bestückendes, weiteres Pressenmodul 1, das ebenfalls mit dem Schienensystem 33 gekoppelt ist oder werden kann, über das Schienensystem 33 an einen entsprechenden Pressenmodulstellplatz P, in den Pressenverbund einzufügen bzw. zu integrieren.

Mit dem Schienensystem 33 ist im vorliegenden Beispiel jedes der Pressenmodule 1, an der jeweiligen Bearbeitungsposition bzw. am jeweiligen Pressenmodulstellplatz P als eine als Ganzes austauschbare funktionelle Einheit, einschließlich der Handhabungseinrichtungen, in die Bearbeitungslinie integriert. Die Anzahl der austauschbar integrierten oder integrierbaren Pressenmodule 1 kann, beispielsweise je nach Art der Pressenlinie 2 und Art des herzustellenden Werkstücks variieren.

Ein Vorteil der modular austauschbaren Pressenmodule 1 und der modular austauschbaren Integration der Pressenmodule 1 über ein Führungssystem, wie z.B. das Schienensystem 33 oder ein anderes System, mit dem die Pressenmodule in einfacher Weise und schnell ausgetauscht werden können, besteht darin, dass Wartung und Reparatur eines Pressenmoduls 1 nach Entnahme aus dem Pressenverbund außerhalb der Pressenlinie 2 durchgeführt werden können. Durch Einsetzen eines Ersatzpressenmoduls kann die Pressenlinie 2 im Wesentlichen ohne große Unterbrechungen weiterbetrieben werden, so dass die z.B. für Wartung und Reparatur benötigten Stillstandzeiten der Pressenlinie 2 deutlich reduziert werden können. Auch kann ein defektes Pressenmodul in einfacher Weise, und ohne langwierigen Unterbrechungen des Produktionsprozesses, ersetzt werden.

Ferner ist es möglich, die Pressenlinie 2 vergleichsweise einfach umzurüsten, beispielsweise zur Herstellung eines andersartigen Werkstücks, oder im Zusammenhang mit dem Einfügen einer anderen modularen Bearbeitungseinheit oder eines anderen modularen Pressenmoduls, d.h. eines modular austauschbaren Pressenmoduls, an Stelle eines modular austauschbar integrierten Pressenmoduls 1 oder einer entsprechenden Bearbeitungseinheit. Insbesondere können Bearbeitungsschritte ausgetauscht, vertauscht, ergänzt und/oder verändert werden, beispielsweise durch Austausch bzw. Variation der Sequenz oder Anordnung der Pressenmodule 1 der Bearbeitungsstationen längs der Bearbeitungslinie.

Die Pressenlinie 2 kann entsprechend der weiter oben beschriebenen Art und Weise betrieben werden, wobei insbesondere auf obige Ausführungen zum Austausch bzw. Wechsel von Pressenmodulen 1 verwiesen wird. Ferner wird auf die obigen Ausführungen betreffend Try-Out-Pressen und die Einrichtung von Steuer-, Press-, und Prozessparameter verwiesen, die entsprechend anwendbar sind.

Das Schienensystem 33 des Ausführungsbeispiels der FIG. 9 umfasst eine Mehrzahl längs der Bearbeitungslinie angeordneter Schienen 34, die quer, insbesondere senkrecht zur Bearbeitungslinie, d.h. Werkstückflussrichtung R, angeordnet sind. Somit lassen sich einzelne, modular an jeweiligen Pressenmodulstellplätzen integrierte, Pressenmodule 1 quer zur Bearbeitungslinie aus dem Pressenverbund herausfahren. An einem herausgefahrenen Pressenmodul 1 sind diverse Komponenten, wie z.B. Pressenstößel 5, Pressentisch 12, die Handhabungseinrichtungen 11, 14 usw., besser zugänglich. Kurze Wartungsarbeiten können bei einem herausgefahrenen Pressenmodul 1 vergleichsweise einfach ausgeführt werden. Ein entnommenes, d.h. mittels des Schienensystems 33 herausgefahrenes, Pressenmodul 1 kann auch durch ein anderes, insbesondere gleich eingerichtetes, weiteres Pressenmodul 1 ersetzt werden. Wegen Vorteilen wird auf die obigen Ausführungen verwiesen.

Das Schienensystem 33 kann sich ausgehend von der Pressenlinie 2 im Wesentlichen in beliebiger Weise erstrecken. Insbesondere kann die Pressenlinie 2 über das Schienensystem 33 mit einem Magazin mit Reserve- oder Austauschpressenmodulen oder anderen Bearbeitungseinheiten verbunden bzw. bestückt sein, so dass jederzeit z.B. einzelne Pressenmodule 1 gegen andere Pressenmodule und/oder Bearbeitungseinheiten ausgetauscht werden können. Auch andere Bearbeitungseinheiten, z.B. für Schweiß-, Schneid-, oder Markieroperationen usw. können an das Schienensystem 33 gekoppelt oder koppelbar sein, so dass auch diese weiteren Bearbeitungseinheiten modular austauschbar in die Pressenlinie 2 integriert werden können.

Ferner kann das Führungssystem, insbesondere das Schienensystem 33, so eingerichtet sein, dass mehrere Bearbeitungszentren oder Pressenlinien miteinander verbunden werden können, so dass einzelne Pressenmodule 1 zwischen den Bearbeitungszentren ausgetauscht werden können, und die Bearbeitungszentren entsprechend flexibel eingerichtet werden können.

Vorzugsweise weisen die einzelnen Pressenmodule 1 eigene Steuereinheiten auf, die einen autarken Betrieb eines einzelnen Pressenmoduls 1 ermöglichen, und vorzugsweise derart eingerichtet sind, dass diese mit einer übergeordneten Master-Steuerung in einem Pressenverbund synchron steuerbar sind.

Im Pressenverbund, wie z.B. bei Integration in eine Pressenlinie 2 der FIG. 9, können die Steuereinheiten der Pressenmodule 1 an eine übergeordnete Mastersteuereinheit angeschlossen sein, welche dazu eingerichtet ist, sämtliche Bearbeitungseinheiten zu steuern, und den Betrieb sämtlicher Bearbeitungseinheiten der Pressenlinie 2 zu synchronisieren.

Dadurch, dass die Pressenmodule mit verschiedenen Betriebsweisen eingerichtet werden können, insbesondere entsprechend einem Einzelbetrieb und einem Betrieb in Pressenverbund, können, z.B. bei einem entsprechend ausgestalteten Führungssystem, insbesondere dem Schienensystem 33, wahlweise Bearbeitungszentren mit einzelnen Pressenmodulen 1 im Einzelbetrieb, oder Bearbeitungszentren mit mehreren miteinander kombinierten Pressenmodulen 1 im Verbundbetrieb eingerichtet werden.

Weitere Bearbeitungseinheiten, wie z.B. Materialzufuhr, Werkstückabtransport, Puffereinheiten usw. können in Ausgestaltungen ebenfalls über ein oder das Führungssystem, insbesondere das Schienensystem 33, bewegbar und modular austauschbar in die Pressenlinie 2 integrierbar ausgebildet sein, so dass eine flexible Einrichtung eines Bearbeitungszentrums möglich ist.

Das im Zusammenhang mit FIG. 9 gezeigte Schienensystem 33 ermöglicht ein seitliches Herausschieben der Pressenmodule 1. In Ausgestaltungen kann das Schienensystem 33, oder ein anderes Führungssystem, so eingerichtet sein, dass ein Verschieben eines oder mehrerer Pressenmodule 1 oder jeweiliger Bearbeitungseinheiten auch parallel zur Bearbeitungslinie möglich ist. Hierdurch ergeben sich weitere Vorteile und Erleichterungen für die Einrichtung einer Pressenlinie bzw. eines Bearbeitungszentrums.

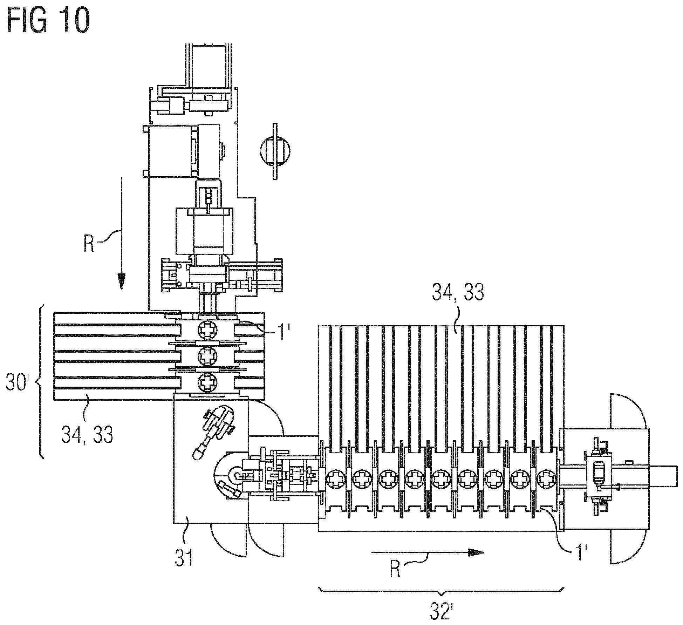

FIG. 10 zeigt ein Fertigungssystem mit Fertigungsmodulen 1', das in einer Konfiguration mit abgewinkelter Fertigungslinie 2' und zwischengeschalteter Puffereinheit 31 ausgebildet ist.

Die Fertigungsmodule 1' sind analog zu den Pressenmodulen 1 der Pressenlinie 2 der FIG. 9 modular austauschbar installiert bzw. ausgebildet. Insbesondere können die Fertigungsmodule 1' anhand von Schienen 34 quer, insbesondere lokal jeweils senkrecht zur Fertigungslinie, aus dem Fertigungsverbund entnommen und eingesetzt, bzw. ersetzt werden.

Im Beispiel der FIG. 10 ist die Fertigungslinie 2' in abgewinkelter Konfiguration ausgebildet, wobei eine erste Teilfertigungslinie 30' mit mehreren in Reihe geschalteten Fertigungsmodulen 1' im Wesentlichen senkrecht zu einer zweiten Teilfertigungslinie 32', wiederum umfassend mehrere in Reihe hintereinander geschaltete Fertigungsmodule 1', angeordnet ist.

Die Fertigungsmodule 1', insbesondere einige der Fertigungsmodule 1', können insbesondere derart ausgebildet sein, dass zumindest zwischen zwei, oder zumindest zwischen mehreren, vorzugsweise jeweils zwischen zwei, in Fertigungsrichtung R unmittelbar aufeinanderfolgenden Fertigungsmodulen der Fertigungslinie 2', z.B. der ersten oder zweiten Teilfertigungslinie 30', 32' eine wie weiter oben beschriebene Ablageeinheit, insbesondere in Funktion einer Zwischenablage, angeordnet bzw. vorhanden ist. Damit ist zwischen den aufeinanderfolgenden Fertigungsmodulen 1' ein Werkstücktransport zwischen deren Fertigungsräumen 9 über die Ablageeinheit möglich. Mittels der Ablageeinheit, beispielsweise durch entsprechende Manipulatoren, oder Werkzeuge, können Handhabungsoperationen wie Drehen oder Wenden, oder Fertigungszwischenschritte durchgeführt werden. Ferner können Werkstücke ausgeschleust und/oder Werkstückkomponenten eingeschleust werden.

Am fertigungstechnisch gesehenen Ende der Fertigungslinie 2' kann eine Endablage 35 ausgebildet sein, an oder mittels welcher die die Fertigungslinie 2' durchlaufenen Werkstücke abgelegt oder abgeführt werden können. Jede der Teilfertigungslinien 30' und 32' kann als solche wiederum als eigenständige Fertigungslinie 2' im Sinne der Erfindung angesehen werden, insbesondere da jede der Teilfertigungslinien 30' und 32' zumindest ein Fertigungsmodul 1' mit einer als Zwischenablage ausgebildeten Ablageeinheit umfasst, die eine Zwischenablage bzw. Zwischenpositionierung eines Werkstücks zwischen in Fertigungsrichtung R unmittelbar aufeinanderfolgenden Fertigungsräumen ermöglicht.

Es zeigt sich, dass die hierin vorgeschlagenen Fertigungsmodule zur modularen austauschbaren Integration in eine Fertigungslinie mit einem oder mehreren modular bestückbaren Fertigungsmodulstellplatzen insbesondere die eingangs erwähnten produktions- und anlagentechnischen Vorteile bieten.

Die hierin im Zusammenhang mit Fertigungsmodulen, Fertigungslinien und Fertigungsmodulstellplätzen beschriebenen Merkmale und Ausgestaltungen gelten insbesondere für, und sind insbesondere Anwendbar bei Pressenmodulen, Pressenlinien und Pressenmodulstellplätzen.

### Bezugszeichenliste

- 1: Pressenmodul;
- 1': Fertigungslinie;
- 2: Pressenlinie;
- 2': Fertigungslinie;
- 3: Pressenrahmen
- 4: Innenflanke
- 5: Pressenstößel
- 6: Hydraulikzylinder
- 7: Gleitelement
- 8: Führungselement
- 9: Arbeitsraum
- 10: Ausnehmung
- 11: erste Handhabungseinrichtung
- 12: Pressentisch
- 13: Flansch
- 14: zweite Handhabungseinrichtung
- 15: Ablageschlitten
- 16: Linearführung
- 17: Oberwerkzeug
- 18: Unterwerkzeug
- 19: Kugelrollenleisten
- 20: lateraler Durchbruch
- 21: Manipulator
- 22: Greiforgan
- 23: Aktuatoreinheit
- 24: Linearführung
- 25: Aktuator
- 26: Montageplatte
- 27: Werkstück
- 28: Zubringereinheit
- 29: Blech-Coil
- 30: erste Bearbeitungseinheit
- 30': erste Teilfertigungslinie
- 31: Puffereinheit
- 32: zweite Bearbeitungseinheit
- 32': zweite Teilfertigungslinie
- 33: Schienensystem
- 34: Schiene
- 35: Endablage

- A: Arbeitsachse
- B: Breitseite
- P: Pressenmodulstellplatz
- R: Werkstückflussrichtung

## Patentansprüche

1. Fertigungsmodul (1, 1'), insbesondere Pressenmodul, ausgebildet zur Durchführung zumindest eines Fertigungsschritts in einem Verfahren zur Fertigung eines Werkstücks (27), und eingerichtet zur Integration in ein modulares Fertigungssystem (2, 2') mit mehreren entlang einer Fertigungslinie (2, 2') sequentiell zueinander angeordneten Fertigungsmodulen (1, 1') mit Fertigungsräumen (9) zur Ausbildung eines entlang der Fertigungslinie (2, 2') verlaufenden Fertigungskanals, umfassend zumindest eine Handhabungseinheit (14), welche in Richtung der Fertigungslinie (2, 2') dem Fertigungsmodul (1, 1') vor- oder nachgeschaltet ein Ablagesystem (15, 16) mit zumindest einer Ablageeinheit (15) zur Ablage eines Werkstücks (27) oder einer Werkstückkomponente umfasst, wobei das Ablagesystem (15, 16) derart eingerichtet ist, dass ein Werkstück (27) oder eine Werkstückkomponente bei der Fertigung zwischen einer Ablageposition der Ablageeinheit (15) und einer Fertigungsposition im Fertigungsraum (9) eines zur Durchführung eines Fertigungsschritts in Fertigungsrichtung (R) längs der Fertigungslinie (2, 2') unmittelbar nachgeschalteten Fertigungsmoduls (1, 1') überführbar ist, wobei das Ablagesystem (15, 16) zumindest einen parallel zu einer in Richtung der Fertigungslinie (2, 2') orientierten Breitseite (B) des Fertigungsmoduls (1, 1') und quer zur Fertigungsrichtung (R) längs der Fertigungslinie (2, 2'), verschiebbar angebrachten, und dem Arbeitsraum (9) in Fertigungsrichtung (R) längs der Fertigungslinie (2, 2') vor- oder nachgeschalteten Verschiebeschlitten (15) umfasst, mit dem ein Werkstück (27) oder eine Werkstückkomponente zwischen einer dem Fertigungsraum (9) zugeordneten Ablageposition und zumindest einer von der Ablageposition lateral beabstandeten weiteren Ablageposition bewegbar ist, **dadurch gekennzeichnet, dass** das Fertigungsmodul (1, 1') einen Rahmen umfasst und das Ablagesystem (15, 16) an der Breitseite des Fertigungsmoduls (1, 1') am Rahmen des Fertigungsmoduls (1, 1') angebracht ist.

2. Fertigungsmodul (1, 1') nach Anspruch 1,wobei die Handhabungseinheit (14) zumindest zwei, insbesondere genau zwei, Verschiebeschlitten (15) umfasst, wobei die Verschiebeschlitten (15), vorzugsweise mittels einer Verschiebeeinheit (16), insbesondere einer Linearverschiebeeinheit (16), jeweils, insbesondere synchronisiert, zwischen einer dem Fertigungsraum (9) bzw. der Fertigungslinie (2, 2') zugeordneten ersten Position und zumindest einer vom Fertigungsraum (9) bzw. der Fertigungslinie lateral abgewandten zweiten Position, insbesondere zumindest einer lateral zumindest teilweise außerhalb des Fertigungskanals der Fertigungslinie (2, 2') gelegenen zweiten Position, insbesondere lateral senkrecht zur Fertigungslinie (2, 2'), bewegbar sind.

3. Fertigungsmodul (1, 1') nach Anspruch 1 oder 2 umfassend eine weitere Handhabungseinheit (11), eingerichtet zur Überführung des oder eines Werkstücks (27) oder der oder einer Werkstückkomponente zwischen der Ablageposition einer dem Fertigungsmodul (1, 1') vor- und/oder nachgeschalteten Ablageeinheit (15) und der Fertigungsposition im Fertigungsraum (9) des jeweiligen Fertigungsmoduls (2, 2').

4. Fertigungsmodul (1, 1') nach einem der Ansprüche 1 bis 3, wobei das Ablagesystem (15, 16) dazu eingerichtet ist, separate und/oder zusätzliche Prozessfunktionen auszuführen, umfassend insbesondere Drehen, Markieren, Prozess und/oder Qualitätskontrolle von Werkstücken (27) oder Werkstückkomponenten, und/oder dazu eingerichtet ist, Werkstücke (27) oder Werkstückkomponenten ein- und/oder auszuschleusen.

5. Fertigungsmodul (1, 1'), nach einem der Ansprüche 1 bis 4, umfassend des Weiteren:
- eine mechanische Verbindungseinheit (33, 34) zum austauschbar mechanischen Koppeln des Fertigungsmoduls (1, 1') mit einer der Fertigungslinie (2, 2') zugeordneten Plattform (33), wobei die Plattform (33) mehrere, mit Fertigungsmodulen (1, 1') modular bestückbare Fertigungsmodulstellplätze (P) zur austauschbaren Positionierung und Einrichtung von, insbesondere sequentiell hintereinander längs der Fertigungslinie (2, 2') angeordneten, Fertigungsmodulen (1, 1') umfasst und/oder
- eine Steuerschnittstelle eingerichtet zur austauschbar lösbaren, steuerungstechnischen Kopplung mit einer korrespondierenden Komplementärsteuerschnittstelle des Fertigungssystems (2, 2'), wobei die Steuerschnittstelle und die Komplementärsteuerschnittstelle eingerichtet sind zum Austausch insbesondere von Steuer- und/oder Prozesssignalen betreffend den Betrieb der Handhabungseinheit (14, 11) und/oder die Durchführung einer Fertigungsoperation durch eine Fertigungseinheit (17, 18) des Fertigungsmoduls (1, 1') und/oder
- eine Steuereinheit zur Steuerung des Fertigungsmoduls (1, 1') zur Durchführung von Fertigungsoperationen, wobei die Steuereinheit in einer Betriebsart als Slave-Steuereinheit zur Umsetzung von Steuerbefehlen einer steuerungstechnisch übergeordneten Master-steuerung der Fertigungssystems (2, 2') betreibbar ist.

6. Fertigungssystem (2, 2') umfassend eine zur Steuerung des Fertigungssystems (2, 2') eingerichtete Prozessor- oder Rechnereinheit, und zumindest einen, vorzugsweise zumindest zwei oder mehrere, modular austauschbar bestückbare Fertigungsmodulstellplätze (P), der oder die jeweils mit einem Fertigungsmodul (1, 1') nach einem der Ansprüche 1 bis 5 modular austauschbar bestückt ist/sind, wobei optional zumindest ein Fertigungsmodulstellplatz (P) mit einem Fertigungsmodul (1, 1') zur subtraktiven, formativen, und/oder additiven Fertigung eines Werkstücks (27) modular austauschbar bestückbar ist bzw. bestückt ist.

7. Fertigungssystem (2, 2') nach Anspruch 6, umfassend eine als Master-Steuerung ausgebildete erste Steuereinheit, die steuerungstechnisch eingerichtet ist zur Kommunikation mit einer als Slave-Steuerung betreibbaren zweiten Steuereinheit zumindest eines der Fertigungsmodule (1, 1'), wobei die zweite Steuereinheit optional wahlweise unabhängig von der Master-Steuerung betreibbar ist.

8. Verfahren zur Herstellung eines Werkstücks (27) mit einem Fertigungssystem (2, 2') nach einem der Ansprüche 6 oder 7 mit zumindest einem Fertigungsmodul (1, 1') nach einem der Ansprüche 1 bis 5, umfassend zumindest einen der folgenden Schritte:
- Überführen des Werkstücks (27) oder der Werkstückkomponente mittels einer Handhabungseinheit (11) zwischen einer der Fertigungslinie (2, 2') zugeordneten Ablageposition der Ablageeinheit (15) und einer der Ablageposition in Fertigungsrichtung (R) längs der Fertigungslinie (2, 2') unmittelbar nachgeschalteten Fertigungsposition im Fertigungsraum (9) eines Fertigungsmoduls (1, 1'); wobei die Handhabungseinheit (11) dem Fertigungsmodul (1, 1') zugeordnet ist, und optional durch eine Steuerung des Fertigungsmoduls (1, 1') gesteuert wird;
- Überführen des Werkstücks (27) oder der Werkstückkomponente zwischen einer der Fertigungslinie (2, 2') zugeordneten Ablageposition und einer weiteren Ablageposition, insbesondere außerhalb der Fertigungslinie (2, 2'), durch Überführen der Ablageeinheit (15) mit dem darauf befindlichen Werkstück (27) oder der darauf befindlichen Werkstückkomponente zwischen der Ablageposition und der weiteren Ablageposition; wobei in der Ablageposition oder in der weiteren Ablageposition optional ein Handhabungs- und/oder Fertigungszwischenschritt durchgeführt wird.

9. Computerprogrammprodukt umfassend von der zur Steuerung des Fertigungssystems (2, 2') nach Anspruch 6 oder 7 eingerichteten Prozessor- oder Recheneinheit ausführbare Befehle, wobei die Ausführung der Befehle durch die Prozessor- oder Recheneinheit bei der Fertigungsanlage (2, 2') ein Verfahren nach Anspruch 8 bewirkt.

10. Fertigungsmodul nach einem der Ansprüche 1 bis 5, wobei das Fertigungsmodul ein Pressenmodul (1) zur Bearbeitung, insbesondere zur Umformung, von Werkstücken (27), vorzugsweise zumindest teilweise aus Metall, ist, und eingerichtet ist zur modularen Integration in eine als Pressenlinie (2) ausgebildete Fertigungslinie mit zumindest einem als modular bestückbarer Pressenmodulstellplatz (P) ausgebildeten Fertigungsmodulstellplatz (P), und mit mehreren Bearbeitungsstationen (1, 30, 32),
wobei der Rahmen einen, insbesondere umfangsseitig geschlossenen, Pressenrahmen (3) bildet; umfassend:
zumindest einen am Pressenrahmen (3) bewegbar montierten und zur Werkstückbearbeitung ausgebildeten Pressenstößel (5);
einen Antrieb (6), der, einerseits, mit dem Pressenstößel (5) antriebstechnisch gekoppelt ist, und, andererseits, am Pressenrahmen (3) befestigt ist;
einen dem Pressenstößel (5) zugeordneten, innerhalb des Pressenrahmens (3) ausgebildeten und zur Werkstückbearbeitung eingerichteten Arbeitsraum (9) als Fertigungsraum.

11. Fertigungsmodul (1) nach Anspruch 10 und 3, wobei die weitere Handhabungseinheit (11) oder zumindest ein erster Manipulator (21) zumindest teilweise in zumindest einer an den Arbeitsraum (9) anschließenden und sich quer zur Bewegungsachse (A) des Pressenstößels (5) lateral nach außen erstreckenden Ausnehmung (10) angeordnet, und optional am Pressenrahmen (3) befestigt ist.

12. Fertigungsmodul (1) nach Anspruch 10 oder 11, umfassend des Weiteren eine mechanische Verbindungseinheit (33, 34) zum austauschbar mechanischen Koppeln des Pressenmoduls mit einer, einer Pressenlinie (2) zugeordneten Plattform, wobei die Plattform mehrere, mit Pressenmodulen modular bestückbare Pressenmodulstellplätze (P) zur austauschbaren Positionierung und Einrichtung von Pressenmodulen (1) umfasst, und/oder
umfassend des Weiteren eine elektrische, insbesondere elektronische, Schnittstelle eingerichtet zur austauschbar lösbaren Kopplung mit einer korrespondierenden Gegenschnittstelle der der Pressenlinie (2).

13. Fertigungssystem, insbesondere Pressenlinie (2), mit mehreren, zumindest jedoch zwei, entlang einer Bearbeitungslinie an entsprechenden Pressenmodulstellplätzen (P) angeordneten, modular austauschbaren Pressenmodulen (1) ausgebildet nach einem der Ansprüche 10 bis 12, zur Bearbeitung von Werkstücken (27), insbesondere zur Umformenden Bearbeitung von Werkstücken (27), vorzugsweise zumindest teilweise aus Metall, wobei jedes der Pressenmodule (1) einen Pressenrahmen (3) und einen darin bewegbar gelagerten, antreibbaren Pressenstößel (5) umfasst, und wobei jedem Pressenstößel (5) ein zur Werkstückbearbeitung ausgebildeter Arbeitsraum (9) zugeordnet ist, wobei die Pressenmodule (1) sequentiell zueinander angeordnet sind so dass die Arbeitsräume (9) entlang der Bearbeitungsline einen Bearbeitungskanal bilden, wobei die Pressenmodule (1) an für eine jeweilige Betriebsart fest vorgegebenen Bearbeitungspositionen entlang der Bearbeitungslinie angeordnet sind, und wobei zumindest eines der Pressenmodule (1), vorzugsweise jedes der Pressenmodule (1), an der jeweiligen Bearbeitungsposition am entsprechenden Pressenmodulstellplatz (P) als eine als Ganzes austauschbare Einheit in die Bearbeitungslinie (2, 30, 32) integriert ist.

14. Fertigungssystem (2) nach Anspruch 13, umfassend mehrere, zumindest jedoch zwei, Montagesockel (33, 34) ausgebildet zur austauschbaren Aufnahme eines Pressenmoduls (1), wobei ein jeweiliges Pressenmodul (1) zumindest eine zum mechanischen Ankoppeln an den Montagesockel (33, 34) ausgebildete Montageschnittstelle umfasst, wobei optional:
der Montagesockel (33, 34) und die Montageschnittstelle zueinander korrespondierenden Kopplungs- und/oder Kupplungselemente (34) umfassen durch welche ein jeweiliges Pressenmodul (1) austauschbar in die Bearbeitungslinie (2, 30, 32) integriert werden kann, und/oder
wobei der Montagesockel als schachtartiger Einschub (33, 34) ausgebildet ist, oder einen derartigen Einschub umfasst, wobei der Einschub (33, 34) derart ausgebildet ist, dass eines der Pressenmodule (1) in einer Richtung quer, insbesondere senkrecht, zur Bearbeitungslinie (2, 30, 32) aus der Pressenlinie (2) entnommen werden kann, wobei optional der Einschub ein Führungssystem (33, 34), insbesondere Linearführungssystem, vorzugsweise ein Schienensystem (33, 34), umfasst, mit welchem jeweils eines der Pressenmodule (1) koppelbar und quer, insbesondere senkrecht, zur Bearbeitungslinie (2, 30, 32) verschiebbar ist, derart, dass ein jeweiliges Pressenmodul (1) quer, insbesondere senkrecht, zur Bearbeitungslinie (2, 30, 32) entnehmbar und einsetzbar ist, und/oder dass ein jeweiliges Pressenmodul (1) derart positionierbar ist, dass dessen Arbeitsraum (9) fluchtend zum Bearbeitungskanal liegt, oder außerhalb der Bearbeitungslinie (2, 30, 32) gelegen ist, und/oder
umfassend des Weiteren eine mit einer über eine kabelgebundene oder kabellose Datenkommunikation, insbesondere einen Steuerbus, mit einer Pressenliniensteuerung gekoppelte Steuerschnittstelle zur signaltechnischen, insbesondere kabelgebundenen oder kabellosen, Kopplung mit einer Komplementärschnittstelle eines modular austauschbar an einem Pressenmodulstellplatz (P) integrierten Pressenmoduls (1), und ferner zur Übermittlung von Steuerbefehlen und/oder Betriebsparametern des Pressenmoduls (1), und/oder
wobei zumindest eines der modular austauschbaren Pressenmodule (1) eine Pressenmodulsteuerung umfasst, durch welche der Betrieb der Komponenten des Pressenmoduls (1) zumindest teilweise, vorzugsweise vollständig, steuerbar ist, und umfassend optional des Weiteren eine Überwachungseinheit zum Empfang, zur Erfassung und zur Verarbeitung von Betriebsparametern der einzelnen, insbesondere modular austauschbaren Pressenmodule (1).

## Claims

1. A production module (1, 1'), in particular press module, designed for executing at least one production step in a method for producing a workpiece (27), and configured for integration into a modular production system (2, 2') with multiple production modules (1, 1') which are arranged successively in relation to one another along a production line (2, 2') and which have production spaces (9) for forming a production channel running along the production line (2, 2'), comprising at least one manipulator unit (14) which comprises, upstream or downstream of the production module (1, 1') in the direction of the production line (2, 2'), a deposit system (15, 16) with at least one deposit unit (15) for depositing a workpiece (27) or a workpiece component, wherein the deposit system (15, 16) is configured such that a workpiece (27) or a workpiece component is, during the production process, transferable between a deposit position of the deposit unit (15) and a production position in the production space (9) of a production module (1, 1') which, for the execution of a production step, is positioned directly downstream in a production direction (R) along the production line (2, 2'),
wherein the deposit system (15, 16) comprises at least one displacement carriage (15) which is mounted so as to be displaceable parallel to the wide side (B) of the production module (1, 1'), oriented in the direction of the production line (2, 2'), and transversely, with respect to the production direction (R) along the production line (2, 2') and which is positioned upstream or downstream of the working space (9) in the production direction (R) along the production line (2, 2') and by means of which a workpiece (27) or a workpiece component is movable, between a deposit position assigned to the production space (9) and at least one further deposit position which is laterally spaced apart from the deposit position,
**characterized in that** the production module (1, 1') comprises a frame and the deposit system (15, 16) is mounted on the wide side of the production module (1, 1') on the frame of the production module (1, 1').

2. The production module (1, 1') according to claim 1, wherein the manipulator unit (14) comprises at least two, in particular exactly two, displacement carriages (15), wherein the displacement carriages (15) are, preferably by means of a displacement unit (16), in particular a linear displacement unit (16), each movable, in particular laterally perpendicularly with respect to the production line (2, 2'), in particular in synchronized fashion, between a first position, which is assigned to the production space (9) or to the production line (2, 2'), and at least one second position, which is laterally averted from the production space (9) or the production line, in particular at least one second position which is situated laterally at least partially outside the production channel of the production line (2, 2').

3. The production module (1, 1') according to claim 1 or 2, comprising a further manipulator unit (11) which is configured for transferring the or a workpiece (27) or the or a workpiece component between the deposit position of a deposit unit (15) positioned upstream and/or downstream of the production module (1, 1') and the production position in the production space (9) of the respective production module (1, 1').

4. The production module (1, 1') as claimed in any of claims 1 to 3, wherein the deposit system (15, 16) is configured to execute separate and/or additional process functions, including in particular rotating, marking and performing process and/or quality control on workpieces (27) or workpiece components, and/or is configured to transfer in or transfer out workpieces (27) or workpiece components.

5. The production module (1, 1') as claimed in any of claims 1 to 4, furthermore comprising a mechanical connecting unit (33, 34) for the exchangeable mechanical coupling of the production module (1, 1') to a platform (33) assigned to the production line (2, 2'), wherein the platform (33) comprises multiple production module installation locations (P), which are modularly populatable with production modules (1, 1'), for the exchangeable positioning and setting-up of production modules (1, 1'), which are in particular arranged successively one behind the other along the production line (2, 2'); and/or
a control interface configured for exchangeably detachable coupling in terms of control technology to a corresponding complementary control interface of the production system (2, 2'), wherein the control interface and the complementary control interface are configured for the exchange of in particular control and/or process signals relating to the operation of the manipulator unit (14, 11) and/or the execution of a production operation by means of a production unit (17, 18) of the production module (1, 1'); and/or
a control unit for the control of the production module (1, 1') for the execution of production operations, wherein the control unit is operable in an operating mode as a slave control unit for implementing control commands of a master controller, which is superordinate in terms of control technology, of the production system (2, 2').

6. A production system (2, 2') comprising a processor or computing unit configured to control the production system (2, 2'), and at least one, preferably at least two or more, modularly exchangeably populatable production module installation locations (P) which is/are each modularly exchangeably populatable with a production module (1, 1') as claimed in any of claims 1 to 5;
optionally, wherein at least one production module installation location (P) is modularly exchangeably populatable or populated with a production module (1, 1') for subtractive, formative and/or additive production of a workpiece (27).

7. The production system (2, 2') according to claim 6, comprising a first control unit which is configured as a master controller and which is configured in terms of control technology for communication with a second control unit, which is operable as a slave controller, of at least one of the production modules (1, 1'), wherein the second control unit is optionally selectively operable independently of the master controller.

8. A method for manufacturing a workpiece (27) by means of a production system (2, 2') according to claim 6 or 7, having at least one production module (1, 1') as claimed in any of claims 1 to 5, comprising at least one of the following steps:
- transferring the workpiece (27) or the workpiece component by means of a manipulator unit (11) between a deposit position, assigned to the production line (2, 2'), of the deposit unit (15) and a production position, positioned directly downstream of the deposit position in the production direction (R) along the production line (2, 2'), in the production space (9) of a production module (1, 1'); wherein the manipulator unit (11) is assigned to the production module (1, 1') and is optionally controlled by a controller of the production module (1, 1');
- transferring the workpiece (27) or the workpiece component between a deposit position assigned to the production line (2, 2') and a further deposit position, in particular outside the production line (2, 2'), by transfer of the deposit unit (15) with the workpiece (27) situated thereon or the workpiece component situated thereon between the deposit position and the further deposit position; wherein a manipulating and/or production intermediate step is optionally performed in the deposit position or in the further deposit position.

9. A computer program product comprising commands which are executable by a processor or computing unit configured for controlling a production system (2, 2') according to claim 6 or 7, wherein the execution of the commands by the processor or computing unit in the production plant (2, 2') implements a method according to claim 8.

10. A production module, as claimed in any of claims 1 to 5, wherein the production module is a press module (1) for the processing, in particular for the forming, of workpieces (27) preferably composed at least partially of metal and is configured for modular integration into a production line which is in the form of a press line (2) and which has at least one production module installation location (P) in the form of a modularly populatable press module installation location (P) and which has multiple processing stations (1, 30, 32);
wherein the frame forms an, in particular peripherally closed, press frame (3); comprising:
at least one press plunger (5) which is movably mounted on the press frame (3) and which is designed for the processing of workpieces;
a drive (6) which, at one side, is coupled in terms of drive to the press plunger (5) and, at the other side, is fastened to the press frame (3);
a working space (9), which is assigned to the press plunger (5) and which is formed within the press frame (3) and which is configured for the processing of workpieces, as production space.

11. The production module (1) according to claim 10 and 3, wherein the further manipulator unit (11) or at least one first manipulator (21) is arranged at least partially in at least one recess (10) adjoining the working space (9) and extending laterally outward transversely with respect to the movement axis (A) of the press plunger (5) and is optionally fastened to the press frame (3).

12. The production module (1) according to claim 10 or 11, furthermore comprising a mechanical connecting unit (33, 34) for the exchangeable mechanical coupling of the press module to a platform assigned to a press line (2), wherein the platform comprises multiple press module installation locations (P), which are modularly populatable with press modules, for the exchangeable positioning and setting-up of press modules (1), and/or furthermore comprising an electrical, in particular electronic, interface configured for exchangeably detachable coupling to a corresponding counterpart interface of the press line (2).

13. A production system, in particular press line (2), having multiple, but at least two, modularly exchangeable press modules (1), arranged in accordance with any of claims 10 to 12, which are arranged along a processing line at corresponding press module installation locations (P) and which serve for the processing of workpieces (27), in particular for the forming of workpieces (27) preferably composed at least partially of metal, wherein each of the press modules (1) comprises a press frame (3) and a driveable press plunger (5) movably mounted therein, and wherein each press plunger (5) is assigned a working space (9) which is designed for the processing of workpieces, wherein the press modules (1) are arranged successively in relation to one another such that the working spaces (9) form a processing channel along the processing line, wherein the press modules (1) are arranged at processing positions, which are fixedly predefined for a respective operating mode, along the processing line, and wherein at least one of the press modules (1), preferably each of the press modules (1), is integrated, as a unit which is exchangeable as a whole, into the processing line (2, 30, 32) at the respective processing position at the corresponding press module installation location (P).

14. The production system (2) according to claim 13, comprising multiple, but at least two, mounting pedestals (33, 34) designed for exchangeably receiving a press module (1), wherein a respective press module (1) comprises at least one mounting interface designed for mechanical coupling to the mounting pedestal (33, 34), wherein, optionally: the mounting pedestal (33, 34) and the mounting interface comprise mutually corresponding coupling elements (34) by means of which a respective press module (1) may be exchangeably integrated into the processing line (2, 30, 32), and/or wherein the mounting pedestal is designed as a tray-like insert (33, 34) or comprises such an insert, wherein the insert (33, 34) is designed such that one of the press modules (1) may be removed from the press line (2) in a direction transverse, in particular perpendicular, to the processing line (2, 30, 32), wherein, optionally, the insert comprises a guide system (33, 34), in particular linear guide system, preferably a rail system (33, 34), by means of which in each case one of the press modules (1) is couplable and displaceable transversely, in particular perpendicularly, with respect to the processing line (2, 30, 32), such that a respective press module (1) is removable and insertable transversely, in particular perpendicularly, in relation to the processing line (2, 30, 32), and/or in that a respective press module (1) is positionable such that its working space (9) is situated in alignment with the processing channel, or is situated outside the processing line (2, 30, 32); and/or
furthermore comprising a control interface which is coupled via a wired or wireless data communication means, in particular a control bus, to a press line controller and which serves for, in particular wired or wireless, coupling in terms of signal technology to a complementary interface of a press module (1) which is modularly exchangeably integrated at a press module installation location (P) and furthermore for transmission of control commands and/or operating parameters of the press module (1); and/or
wherein at least one of the modularly exchangeable press modules (1) comprises a press module controller by means of which the operation of the components of the press module (1) is at least partially, preferably completely, controllable, and optionally furthermore comprising a monitoring unit for receiving, for acquiring and for data processing of operating parameters of the individual, in particular modularly exchangeable press modules (1).

## Revendications

1. Module de fabrication (1, 1'), en particulier module de pressage, conçu pour réaliser au moins une étape de fabrication dans un procédé de fabrication d'une pièce (27), et agencé pour être intégré dans un système de fabrication modulaire (2, 2') comprenant plusieurs modules de fabrication (1, 1') disposés séquentiellement les uns par rapport aux autres le long d'une ligne de fabrication (2, 2') disposés en série les uns par rapport aux autres et comportant des espaces de fabrication (9) pour former un canal de fabrication s'étendant le long de la ligne de fabrication (2, 2'), comprenant au moins une unité de manutention (14) qui est disposée, dans la direction de la ligne de fabrication (2, 2'), en amont ou en aval du module de fabrication (1, 1') en amont ou en aval de celui-ci, un système de stockage (15, 16) comportant au moins une unité de stockage (15) destinée au stockage d'une pièce (27) ou d'un composant de pièce, le système de stockage (15, 16) est agencé de telle sorte qu'une pièce (27) ou un composant de pièce puisse, au cours de la fabrication, être transféré entre une position de stockage de l'unité de stockage (15) et une position de fabrication dans l'espace de fabrication (9) d'un module de fabrication (1, 1') situé immédiatement en aval de la ligne de fabrication (2, 2') dans le sens de la fabrication (R) le long de la ligne de fabrication (2, 2') immédiatement en aval de celui-ci, le système de stockage (15, 16) comportant au moins un élément de stockage (15, 16) parallèle à un côté large (B) du module de fabrication (1, 1') orienté dans la direction de la ligne de fabrication (2, 2`) et transversalement à la direction de fabrication (R) le long de la ligne de fabrication (2, 2'), et qui est disposé de manière à pouvoir se déplacer par rapport à l'espace de travail (9) dans la direction de fabrication (R) le long de la ligne de fabrication (2, 2') en amont ou en aval de l'espace de travail (9) dans le sens de la production (R) le long de la ligne de production (2, 2'), à l'aide duquel une pièce (27) ou un composant de pièce peut être déplacé entre une position de stockage associée à l'espace de production (9) et au moins une autre position de stockage espacée latéralement de la position de stockage,
**caractérisé en ce que** le module de fabrication (1, 1`) comprend un châssis et **en ce que** le système de stockage (15, 16) est fixé sur le côté large du module de fabrication (1, 1`) au niveau du châssis de celui-ci.

2. Module de fabrication (1, 1`) selon la revendication 1,dans lequel l'unité de manutention (14) comprend au moins deux, en particulier exactement deux, chariots de déplacement (15), les chariots de déplacement (15) étant déplacés, de préférence au moyen d'une unité de déplacement (16), en particulier d'une unité de déplacement linéaire (16), peuvent être déplacés, chacun, en particulier de manière synchronisée, entre une première position associée à l'espace de fabrication (9) ou à la ligne de fabrication (2, 2') et au moins une deuxième position située latéralement à l'opposé de l'espace de fabrication (9) ou de la ligne de fabrication, en particulier au moins une deuxième position située latéralement au moins partiellement à l'extérieur du canal de fabrication de la ligne de fabrication (2, 2'), en particulier latéralement perpendiculairement à la ligne de fabrication (2, 2').

3. Module de fabrication (1, 1') selon la revendication 1 ou 2, comprenant une autre unité de manutention (11), agencée pour transférer la ou une pièce (27) ou le ou un composant de pièce entre la position de dépose d'une unité de dépose (15) située en amont et/ou en aval du module de fabrication (1, 1') et la position de fabrication dans l'espace de fabrication (9) du module de fabrication concerné (2, 2').

4. Module de fabrication (1, 1') selon l'une des revendications 1 à 3, dans lequel le système de stockage (15, 16) est agencé pour exécuter des fonctions de processus distinctes et/ou supplémentaires, comprenant notamment la rotation, le marquage, le contrôle de processus et/ou de qualité de pièces (27) ou de composants de pièces, et/ou est conçu pour acheminer des pièces (27) ou des composants de pièces vers le système et/ou en les en retirer.

5. Module de fabrication (1, 1'), selon l'une des revendications 1 à 4, comprenant en outre :
- une unité de raccordement mécanique (33, 34) destinée au couplage mécanique interchangeable du module de fabrication (1, 1') avec une plate-forme (33) associée à la ligne de fabrication (2, 2'), la plate-forme (33) comportant plusieurs emplacements de module de fabrication (P) pouvant être équipés de manière modulaire avec des modules de fabrication (1, 1') pour le position tion et l'installation interchangeables de modules de fabrication (1, 1') disposés notamment de manière séquentielle les uns derrière les autres le long de la ligne de fabrication (2, 2'), et/ou
- une interface de commande conçue pour permettre un couplage technique de commande amovible et interchangeable avec une interface de commande complémentaire correspondante du système de fabrication (2, 2'), l'interface de commande et l'interface de commande complémentaire étant agencées pour l'échange, en particulier, de signaux de commande et/ou de processus concernant le fonctionnement de l'unité de manutention (14, 11) et/ou l'exécution d'une opération de fabrication par une unité de fabrication (17, 18) du module de fabrication (1, 1') et/ou
- une unité de commande destinée à commander le module de fabrication (1, 1') pour l'exécution d'opérations de fabrication, l'unité de commande pouvant fonctionner, dans un mode de fonctionnement, en tant qu'unité de commande esclave pour la mise en œuvre d'instructions de commande provenant d'une commande maître, hiérarchiquement supérieure sur le plan technique, du système de fabrication (2, 2').

6. Système de fabrication (2, 2') comprenant une unité de traitement ou un processeur configurée pour commander le système de fabrication (2, 2'), et au moins un, de préférence au moins deux ou plusieurs, emplacements de modules de fabrication (P) pouvant être équipés de manière modulaire et interchangeable, qui sont chacun équipés d'un module de fabrication (1, 1') selon l'une des revendications 1 à 5, au moins un emplacement de module de fabrication (P) pouvant être équipé, en option, d'un module de fabrication (1, 1') destiné à la fabrication soustractive, formative et/ou additive d'une pièce (27).

7. Système de fabrication (2, 2') selon la revendication 6, comprenant une première unité de commande conçue comme une commande maître, qui est configurée sur le plan technique de commande pour communiquer avec une deuxième unité de commande pouvant être commandée en tant que commande esclave d'au moins l'un des modules de fabrication (1, 1'), la deuxième unité de commande pouvant être exploitée, en option, indépendamment de la commande maître.

8. Procédé de fabrication d'une pièce (27) à l'aide d'un système de fabrication (2, 2') selon l'une des revendications 6 ou 7, comprenant au moins un module de fabrication (1, 1') selon l'une des revendications 1 à 5, comprenant au moins l'une des étapes suivantes :
- transfert de la pièce (27) ou du composant de pièce au moyen d'une unité de manutention (11) entre une position de stockage de l'unité de stockage (15) associée à la ligne de fabrication (2, 2') et une position de fabrication située immédiatement en aval de la position de stockage dans le sens de fabrication (R) le long de la ligne de fabrication (2, 2') immédiatement en aval de celle-ci dans l'espace de fabrication (9) d'un module de fabrication (1, 1') ; l'unité de manutention (11) étant associée au module de fabrication (1, 1') et, en option, commandée par un système de commande du module de fabrication (1, 1') ;
- transfert de la pièce (27) ou du composant de pièce entre une position de dépose associée à la ligne de fabrication (2, 2') et une autre position de dépose, notamment en dehors de la ligne de fabrication (2, 2'), par le transfert de l'unité de stockage (15) avec la pièce (27) ou le composant de pièce qui s'y trouve entre la position de stockage et l'autre position de stockage ; une étape intermédiaire de manutention et/ou de fabrication étant éventuellement effectuée dans la position de stockage ou dans l'autre position de stockage.

9. Produit logiciel comprenant des instructions exécutables par le processeur ou l'unité de calcul configuré(e) pour commander le système de fabrication (2, 2') selon la revendication 6 ou 7, l'exécution des instructions par le processeur ou l'unité de calcul sur l'installation de fabrication (2, 2') mettant en œuvre un procédé selon la revendication 8.

10. Module de fabrication selon l'une des revendications 1 à 5, le module de fabrication étant un module de presse (1) destiné à l'usinage, en particulier au formage, de pièces (27), de préférence constituées au moins en partie de métal, et est conçu pour une intégration modulaire dans une ligne de production configurée en ligne de presses (2) comprenant au moins un emplacement de module de production (P) conçu comme un emplacement de module de presse pouvant être équipé de manière modulaire, et comportant plusieurs stations d'usinage (1, 30, 32),
le châssis formant un châssis de presse (3), notamment fermé sur son pourtour ; comprenant :
au moins un coulisseau de presse (5) monté de manière mobile sur le châssis de presse (3) et conçu pour l'usinage de pièces ;
un entraînement (6) qui, d'une part, est couplé mécaniquement au coulisseau de presse (5) et, d'autre part, est fixé au châssis de presse (3) ;
un espace de travail (9), associé au coulisseau de presse (5), aménagé à l'intérieur du châssis de presse (3) et équipé pour l'usinage de pièces, servant d'espace de fabrication.

11. Module de fabrication (1) selon les revendications 10 et 3, dans lequel l'unité de manutention supplémentaire (11) ou au moins un premier manipulateur (21) est disposé au moins en partie dans au moins un évidement (10) adjacent à l'espace de travail (9) et s'étendant latéralement vers l'extérieur, transversalement à l'axe de déplacement (A) du coulisseau de presse (5) et s'étendant latéralement vers l'extérieur, et est fixée, en option, au châssis de presse (3).

12. Module de fabrication (1) selon la revendication 10 ou 11, comprenant en outre une unité de raccordement mécanique (33, 34) destinée au couplage mécanique interchangeable du module de presse avec une plate-forme associée à une ligne de presse (2), la plate-forme comprenant plusieurs emplacements de modules de presse (P) pouvant être équipés de manière modulaire de modules de presse, pour le positionnement et l'installation interchangeables de modules de presse (1), et/ou comprenant en outre une interface électrique, notamment électronique, agencée pour un couplage amovible et interchangeable avec une contreinterface correspondante de la ligne de presse (2).

13. Système de fabrication, en particulier une ligne de presses (2), comportant plusieurs, au moins deux, modules de presse (1) interchangeables de manière modulaire, disposés le long d'une ligne d'usinage au niveau d'emplacements de modules de presse (P) correspondants, conçus selon l'une des revendications 10 à 12, pour l'usinage de pièces (27), en particulier pour l'usinage par formage de pièces (27), de préférence constitués au moins en partie de métal, chacun des modules de presse (1) comprenant un châssis de presse (3) et un coulisseau de presse (5) monté de manière mobile et pouvant être entraîné à l'intérieur de celui-ci, et un espace de travail (9) conçu pour l'usinage des pièces étant associé à chaque coulisseau de presse (5), les modules de presse (1) sont disposés de manière séquentielle les uns par rapport aux autres de telle sorte que les espaces de travail (9) forment un canal d'usinage le long de la ligne d'usinage, les modules de presse (1) étant disposés à des positions d'usinage prédéfinies pour un mode de fonctionnement respectif le long de la ligne d'usinage, et au moins l'un des modules de presse (1), de préférence chacun des modules de presse (1), est intégré dans la ligne d'usinage (2, 30, 32) à la position d'usinage respective, sur l'emplacement correspondant (P) du module de presse, sous la forme d'une unité remplaçable dans son ensemble.

14. Système de fabrication (2) selon la revendication 13, comprenant plusieurs, au moins deux, socles de montage (33, 34) conçus pour recevoir de manière interchangeable un module de presse (1), chaque module de presse (1) comprenant au moins une interface de montage conçue pour un couplage mécanique avec le socle de montage (33, 34), dans lequel, en option : le socle de montage (33, 34) et l'interface de montage comportent des éléments de couplage et/ou d'accouplement (34) correspondant les uns aux autres, grâce auxquels un module de presse (1) donné peut être intégré de manière interchangeable dans la ligne de traitement (2, 30, 32), et/ou
le socle de montage est conçu sous la forme d'un emplacement en forme de puits (33, 34), ou comprend un tel emplacement, l'emplacement (33, 34) est conçu de telle sorte que l'un des modules de presse (1) puisse être retiré de la ligne de presse (2) dans une direction transversale, en particulier perpendiculaire, à la ligne de traitement (2, 30, 32), le tiroir pouvant comprendre en option un système de guidage (33, 34), notamment un système de guidage linéaire, de préférence un système de rails (33, 34), auquel chacun des modules de presse (1) peut être couplé et qui est déplaçable transversalement, notamment perpendiculairement, à la ligne de traitement (2, 30, 32), de telle sorte qu'un module de presse (1) donné puisse être retiré et inséré transversalement, notamment perpendiculairement, par rapport à la ligne d'usinage (2, 30, 32), et/ou qu'un module de presse (1) donné puisse être positionné de telle sorte que son espace de travail (9) soit aligné avec le canal d'usinage, ou soit situé à l'extérieur de la ligne d'usinage (2, 30, 32), et/ou
comprenant en outre une interface de commande couplée à une commande de ligne de presse via une communication de données filaire ou sans fil, notamment un bus de commande, pour le couplage par signaux, notamment filaire ou sans fil, avec une interface complémentaire d'un module de presse (1) intégré de manière modulaire et interchangeable à un emplacement de module de presse (P), et en outre destinée à la transmission d'instructions de commande et/ou de paramètres de fonctionnement du module de presse (1), et/ou
au moins l'un des modules de presse (1) interchangeables de manière modulaire comprenant une commande de module de presse, grâce à laquelle le fonctionnement des composants du module de presse (1) peut être commandé au moins partiellement, de préférence entièrement, et comprenant en outre, en option, une unité de surveillance destinée à la réception, à l'acquisition et au traitement des paramètres de fonctionnement des différents modules de presse (1), notamment interchangeables de manière modulaire.
